# EUROPÄISCHE PATENTSCHRIFT

(11) **EP 2 721 089 B1**
(45) Veröffentlichungstag und Bekanntmachung des Hinweises auf die Patenterteilung: **12.08.2015**
(21) Anmeldenummer: 12726126.1
(22) Anmeldetag: 08.06.2012
(51) Int. Cl.: C08G 63/688, C11D 3/37

(54) **VERZWEIGTE POLYESTER MIT SULFONATGRUPPEN**
BRANCHED POLYESTERS WITH SULFONATE GROUPS
POLYESTERS RAMIFIÉS CONTENANT DES GROUPES SULFONATE

(30) Priorität: 15.06.2011 EP 11170013
(43) Veröffentlichungstag der Anmeldung: 23.04.2014
(73) Patentinhaber: BASF SE, 67056 Ludwigshafen (DE)
(72) Erfinder: HABERECHT, Monika, 67063 Ludwigshafen (DE); RITTIG, Frank, 67549 Worms (DE); BRUCHMANN, Bernd, 67251 Freinsheim (DE); ESPER, Claudia, 67271 Kindenheim (DE); ETTL, Roland, 68804 Altlußheim (DE); KOLTER, Karl, 67117 Limburgerhof (DE)
(86) Internationale Anmeldenummer: PCT/EP2012/060848
(87) Internationale Veröffentlichungsnummer: WO 2012/171849

(56) Entgegenhaltungen:
- DE-A1- 2 621 653
- DE-A1- 2 633 418

## Beschreibung

Die vorliegende Erfindung betrifft verzweigte Polyester mit Sulfonatgruppen und Gemische enthaltend verzweigte Polyester mit Sulfonatgruppen. Gegenstand der Erfindung ist weiterhin ein Verfahren zur Herstellung solcher verzweigter Polyester. Weiterhin betrifft die Erfindung die Verwendung dieser verzweigten Polyester als Schmutzlösepolymere und Vergrauungsinhibitoren, beispielsweise bei der Reinigung von Textilien, als Textilhilfsmittel und Reinigungsmittel für harte Oberflächen.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils konkret angegebenen Kombination, sondern auch in anderen Kombinationen verwendbar sind, ohne den Rahmen der Erfindung zu verlassen. Bevorzugt beziehungsweise ganz bevorzugt sind insbesondere auch diejenigen Ausführungsformen der vorliegenden Erfindung, in denen alle Merkmale des erfindungsgemäßen Gegenstandes die bevorzugten beziehungsweise ganz bevorzugten Bedeutungen haben.

In Wasser lösliche oder dispergierbare, verzweigte Copolyester enthaltend Sulfonatgruppen sind aus der DE 26 21 653 A1 bekannt. Diese verzweigten Copolyester sind gemäß der DE 26 21 653 A1 als Egalisierhilfsmittel in der Polyesterfärberei, vor allem für Schnellfärbeverfahren, als Haarfestiger, als Schlichten, als wasserlösliche Klebstoffe und als Zusatz für Klebstoffe, sowie als Modifizierungsmittel für Melaminharze oder andere Aminoplastharze geeignet.

Die DE 26 33 418 A1 beschreibt Haarbehandlungsmittel, mit einem Gehalt an in Wasser löslichen oder dispergierbaren verzweigten Copolyestern enthaltend Sulfonatgruppen.

In der DE 26 37 926 A1 werden in Wasser lösliche oder dispergierbare und verzweigte Copolyester enthaltend Sulfonatgruppen mit einem zur DE 26 21 653 A1 vergleichbaren Anwendungsspektrum beschrieben.

Die US 5,281,630 beschreibt ein Präpolymer basierend auf einem Terephthalpolymer, Glykol und oxyalkyliertem Polyol, das mit a,β-ungesättigten Dicarbonsäuren umgesetzt und anschlieβend sulfoniert wird.

Alemdar et al. beschreiben in Polymer 51 (2010), S. 5044-5050 die Herstellung ungesättigter Polyester unter Einsatz von Borsäure als Katalysator und sulfonierte Derivate der ungesättigten Polyester als bioabbaubare polymere oberflächenaktive Stoffe.

DE 39 05 915 A1 betrifft eine Beschichtungszusammensetzung, enthaltend Additionspolymere, Vernetzungsmittel und einen Säurekatalysator. Als Säurekatalysatoren werden Hydroxylgruppen enthaltende Bemsteinsäurediestersulfonsäuren und Bernsteinsäurepolyestersulfonsäuren beschrieben.

Einfache Sulfosuccinate, beispielsweise Mono- oder Dialkylsulfosuccinate oder Sulfosuccinamide, sind dem Fachmann aus dem Stand der Technik bereits seit 1930 vertraut. Diese Sulfosuccinate werden beispielsweise in Reinigungsmitteln, Pharmazeutika, Klebstoffen oder Beschichtungen eingesetzt. Polymere Sulfosuccinate werden jedoch kaum eingesetzt.

Eine Übersicht über die Einsatzgebiete von Sulfosuccinaten ist beispielweise zu finden in Anionic Surfactants: Organic Chemistry, edited by H. W. Stache, Marcel Dekker, New York, 1996: Chapter 9: Sulfosuccinates by A. Domsch, and B. Irrgang.

Schmutzlösepolymere sind seit vielen Jahren Gegenstand intensiver Entwicklungsarbeiten. Ursprünglich als Textilhilfsmittel für die Ausrüstung von Synthesefasern, insbesondere Polyesterfasern, entwickelt, finden sie heute als sogenannte Waschhilfsstoffe auch Verwendung in Wasch- und Reinigungsmitteln für die Haushaltswäsche. Gängige Bezeichnungen für derartige schmutzablösende Verbindungen sind "Soil Release Polymere" oder "Soil Repellents", weil sie den behandelten Oberflächen schmutzabweisende Eigenschaften verleihen.

Bei der überwiegenden Anzahl der Schmutzlösepolymere handelt es sich um Polyester auf der Basis von Terephthalsäure, Polyalkylenglykolen und monomeren Glykolen.

EP 1 035 194 A2 betrifft die Verwendung von schmutzablösenden Kammpolymeren in Waschund Reinigungsmitteln.

Bekannt sind aus der EP 1 035 194 A2 (Abschnitt [0005]) auch Schmutzlösepolyester, die anionische Gruppen wie beispielsweise Sulfonatgruppen enthalten können.

Die Redeposition von Schmutz auf Textilfasern während des Waschvorgangs ist eine ständige Herausforderung für die Anwender. Daher sind Additive, die helfen, diese Redeposition zu verringern gefragte Zusatzstoffe, beispielsweise für Waschmittel. In der Vergangenheit wurden leistungsstarke Additive für Pulverwaschmittel entwickelt, die aber modernen Anforderungen (z. B. Formulierbarkeit in Flüssigwaschmitteln) nicht mehr voll entsprechen.

Die Aufgabe der Erfindung war es daher Stoffe zur Verfügung zu stellen, die sich für Reinigungszwecke, insbesondere als Zusatz zu Reinigerformulierungen für die Textilbehandlung und Haushaltswäsche einsetzen lassen. Der Erfindung lag weiterhin die Aufgabe zugrunde, mittels eines technisch einfachen und preiswerten Verfahrens polymere Effektstoffe bereitzustellen, die über eine hohe Anzahl von Carboxygruppen und/oder Sulfonsäuregruppen, verfügen und aus Monomeren geringer Toxizität bestehen. Eine weitere Aufgabe der Erfindung war es Stoffe zur Verfügung zu stellen, die sich leicht in Formulierungen für Reinigungszwecke in ihren verschiedenen Darreichungsformen einarbeiten lassen.

Diese und andere Aufgaben werden, wie aus dem Offenbarungsgehalt der vorliegenden Erfindung ersichtlich, durch die verschiedenen Ausführungsformen der erfindungsgemäßen verzweigten Polyester mit Sulfonatgruppen gelöst, die erhältlich sind durch
a. die Umsetzung der Komponenten A, B, optional C und optional D zu verzweigten Polyestern, wobei
   i. die Komponente A gewählt wird aus der Gruppe der α,β-olefinisch ungesättigten Dicarbonsäuren (A₂), und
   ii. die Komponente B gewählt wird aus der Gruppe der tri- oder höherfunktionellen Alkohole (By),
   iii. die optionale Komponente C gewählt wird aus der Gruppe der difunktionellen Alkohole (B₂) oder der difunktionellen Carbonsäuren (C₂) ohne (α,β-olefinisch ungesättigte Bindungen,
   iv. die optionale Komponente D gewählt wird aus Fettsäuren oder Fettalkoholen,
b. und der anschließenden Umsetzung der in (a.) erhaltenen verzweigten Polyester mit Hydrogensulfit, wobei die molare Menge an Hydrogensulfit höchstens 95 Mol-%, bezogen auf die Menge an α,β-olefinisch ungesättigter Dicarbonsäure (A₂) beträgt.

Überraschend wurde unter anderem gefunden, dass diese verzweigten Polyester mit Sulfonatgruppen, die Redeposition von Schmutz auf und die Vergrauung von Polyesterfasern reduzieren.

Selbstverständlich können bei der Umsetzung der Komponenten A, B, optional C und optional D zu verzweigten Polyestern auch Mischungen verschiedener Komponenten A, Mischungen verschiedener Komponenten B, optional Mischungen verschiedener Komponenten C und/oder optional Mischungen verschiedener Komponenten D eingesetzt werden. Bevorzugt werden Mischungen mit bis zu drei verschiedenen Komponenten A, Mischungen mit bis zu drei verschiedenen Komponenten B und/oder optional Mischungen mit bis zu drei verschiedenen Komponenten C eingesetzt. Besonders bevorzugt werden Mischungen mit bis zu zwei verschiedenen Komponenten A, Mischungen mit bis zu zwei verschiedenen Komponenten B und/oder optional Mischungen mit bis zu zwei verschiedenen Komponenten C eingesetzt. Insbesondere werden bei der Umsetzung der Komponenten A, B, optional C und optional D zu verzweigten Polyestern bevorzugt jeweils eine Verbindung A, B und optional C eingesetzt.

Die Carbonsäuren (C₂) der Komponente C tragen keine Sulfonsäure oder Sulfonatgruppen.

Bei den verzweigten Polyestern mit Sulfonatgruppen der Erfindung handelt es sich bevorzugt um dendritische, insbesondere um hyperverzweigte Polyester.

Der Begriff dendritisches Polymer oder auch hochverzweigtes Polymer ist der Oberbegriff für eine Reihe verschiedener verzweigter Molekülstrukturen. Darunter fallen bspw. Dendrimere, Sternpolymere und hyperverzweigte Polymere.

Dendrimere entstehen ausgehend von einem Zentrum (i.d.R. ein kleines Molekül mit mehreren reaktiven Endgruppen) an die durch eine sich ständig wiederholende kontrollierte Reaktionsfolge, Generation um Generation eines verzweigenden Monomers angebracht wird. So wächst mit jedem Reaktionsschritt die Zahl der Monomer-Endgruppen im enstehenden Dendrimer exponentiell an. Ein charakteristisches Merkmal der Dendrimere ist die Anzahl der zu ihrem Aufbau durchgeführten Reaktionsstufen (Generationen). Auf Grund ihres einheitlichen Aufbaus (im Ide-alfall enthalten alle Äste exakt dieselbe Anzahl von Monomereinheiten) sind Dendrimere im Wesentlichen monodispers, d. h. sie weisen in der Regel eine definierte Molmasse auf. Molekular wie strukturell einheitliche hochverzweigte Polymere werden im Folgenden auch einheitlich als Dendrimere bezeichnet.

"Hyperverzweigte Polymere" sind im Rahmen dieser Erfindung hochverzweigte Polymere, die im Gegensatz zu den zuvor genannten Dendrimeren sowohl molekular wie auch strukturell uneinheitlich sind. Hyperverweigte Polymere weisen daher eine uneinheitliche Molmassenverteilung (Polydispersität) auf. Zur Herstellung hyperverzweigter Polymere unterscheidet man verschiedene Synthesestrategien. Eine Übersicht möglicher Syntheseverfahren findet sich in C. Gao, D. Yan, Prog. Polym. Sci. 29 (2004), 183.

Zur Definition von dendritischen und hyperverzweigten Polymeren siehe auch P.J. Flory, J. Am. Chem. Soc. 1952, 74, 2718 und H. Frey et al., Chemistry - A European Journal, 2000, 6, No. 14, 2499.

Dendritische Polymere lassen sich über Ihren Verzweigungsgrad "Degree of Branching" charakterisieren. Zur Definition des "Degree of Branching" wird auf H. Frey et al., Acta Polym. 1997, 48, 30 verwiesen. Der Verzweigungsgrad DB ist dabei definiert als DB (%) = (T + Z) / (T + Z + L) x 100, mit
- T: mittlere Anzahl der terminal gebundenen Monomereinheiten,
- Z: mittlere Anzahl der Verzweigungen bildenden Monomereinheiten,
- L: mittlere Anzahl der linear gebundenen Monomereinheiten.

Dendrimere weisen im Allgemeinen einen Verzweigungsgrad DB von wenigstens 99 %, speziell 99,9 bis 100 %, auf.

Hyperverzweigte Polymere weisen vorzugsweise einen Verzweigungsgrad DB von 10 bis 95 %, bevorzugt 25 bis 90 % und insbesondere 30 bis 80 %, auf.

Die erfindungsgemäß eingesetzten verzweigten Polyester weisen vorzugsweise einen Verzweigungsgrad (Degree of Branching, DB) pro Molekül von 10 bis 95 %, bevorzugt von 10 bis 90 %, besonders bevorzugt von 10 bis 80 %, und insbesondere 20 bis 80 % auf.

Unter hyperverzweigten Polyestern mit oder ohne Sulfonatgruppen werden im Rahmen dieser Erfindung unvernetzte Polyester mit oder ohne Sulfonatgruppen verstanden, die sowohl strukturell als auch molekular uneinheitlich sind. Unvernetzt im Rahmen dieser Schrift bedeutet, dass ein Vernetzungsgrad von weniger als 15 Gew.-%, bevorzugt von weniger als 10 Gew.-%, bestimmt über den unlöslichen Anteil des Polymeren, vorhanden ist.

Der unlösliche Anteil des Polymeren wurde bestimmt durch vierstündige Extraktion in einer Soxhlet-Apparatur mit einem Lösungsmittel in dem das Polymer löslich ist, beispielsweise Tetrahydrofuran, Dimethylacetamid oder Hexafluorisopropanol, bevorzugt Tetrahydrofuran. Nach Trocknung des Rückstandes bis zur Gewichtskonstanz erfolgt eine Wägung des verbliebenen Rückstandes.

In einer bevorzugten Ausführungsform werden die erfindungsgemäßen verzweigten Polyester mit Sulfonatgruppen erhalten unter Einsatz der Komponente D, wobei bevorzugt weniger als 20 Mol -% der Komponente D bezogen auf die Gesamtmenge an Komponenten A, B, C und D eingesetzt werden. Bevorzugt werden hierbei weniger als 10 Mol-% der Komponente D eingesetzt und ganz besonders bevorzugt weniger als 5 Mol-%. Bevorzugt wird die Komponente D gewählt aus Fettsäuren oder Fettalkoholen.

Geeignete Fettsäuren oder Fettalkohole können 8 bis 30 Kohlenstoffatome umfassen, bevorzugt 12 bis 25, und besonders bevorzugt 16 bis 20 Kohlenstoffatome.

Beispiele für geeignete Fettsäuren sind Octansäure, Isononansäure, Caprinsäure, Undecansäure, Laurinsäure, Myristinsäure, Pentadecansäure, Palmitinsäure, Margarinsäure, Stearinsäure, Nonadecansäure, Arachinsäure, Behensäure, Ölsäure, Linolsäure, Linolensäure, Benzoesäure, α- oder β-Naphthalinsäure.

In einer bevorzugten Ausführungsform der verzweigten Polyester mit Sulfonatgruppen beträgt der Anteil der tri- oder höherfunktionellen Komponente B in Schritt a. mindestens 30 Mol-% bezogen auf die Gesamtmenge an Komponenten A, B, C und D, besonders bevorzugt mindestens 35 Mol-% und ganz besonders bevorzugt mindestens 40 Mol-%.

In einer weiteren bevorzugten Ausführungsform der verzweigten Polyester mit Sulfonatgruppen werden in Schritt a. mindestens 5 Mol-% der Komponenten A, bezogen auf die Gesamtmenge an Komponenten A, B, C und D eingesetzt. Bevorzugt werden hierbei mindestens 10 Mol-% eingesetzt. Bevorzugt beträgt der Anteil der Komponente A, bezogen auf die Gesamtmenge an Komponenten A, B, C und D höchstens 60 Mol-%, bevorzugt höchstens 50 Mol-% und ganz besonders bevorzugt höchstens 40 Mol-%.

Die Menge an Hydrogensulfit in Schritt b kann im Rahmen der erfindungsgemäßen verzweigten Polyester mit Sulfonatgruppen abhängig von der jeweiligen Anwendung in einem weiten Bereich variieren. Bevorzugt werden jedoch von 10 bis 95 Mol-%, besonders bevorzugt von 20 bis 92 Mol-% und insbesondere von 30 bis 90 Mol-% Hydrogensulfit bezogen auf die Menge an α,β-olefinisch ungesättigten Dicarbonsäuren (A₂), eingesetzt.

Die Molekulargewichte der verzweigten Polyester wurden vor der Umsetzung mit Hydrogensulfit mittels Gelpermeationschromatographie (GPC) gegenüber Polymethylmethacrylat (PMMA) als Standard bestimmt. Dabei wurden Dimethylacetamid oder Tetrahydrofuran als Eluenten verwendet. Die Methode ist beschrieben in Analytiker Taschenbuch Vol. 4, Seiten 433 - 442, Berlin 1984.

Die so bestimmten gewichtsmittleren Molekulargewichte (M_{w}) der Polyester A vor der Umsetzung mit Hydrogensulfit liegen im Bereich von 500 g/mol bis 50.000 g/mol, bevorzugt im Bereich von 750 g/mol bis 25.000 g/mol und ganz besonders bevorzugt im Bereich von 1000 g/mol bis 15.000 g/mol.

Die verzweigten Polyester vor der Umsetzung mit Hydrogensulfit weisen Säurezahlen von 10 bis 500 mg KOH/g Polymer, vorzugsweise 15 bis 400 mg KOH/g Polymer und ganz besonders bevorzugt 20 bis 300 mg KOH/g Polymer auf. Die Bestimmung der Säurezahl erfolgte nach DIN 53402.

Die verzweigten Polyester A vor der Umsetzung mit Hydrogensulfit weisen Glasübergangstemperaturen im Bereich von -50 bis +50 °C, bevorzugt -40 bis +40 °C und ganz besonders bevorzugt -30 bis +40 °C auf. Die Bestimmung der Glasübergangstemperatur erfolgt mittels DSC (Differential Scanning Calorimetry).

Bevorzugt werden für die verzweigten Polyester mit Sulfonatgruppen als α,β-olefinisch ungesättigte Dicarbonsäuren (A₂) Maleinsäure, Itaconsäure, Fumarsäure, Citraconsäure, Mesaconsäure oder Glutaconsäure eingesetzt. Besonders bevorzugt sind Maleinsäure und Itaconsäure, ganz besonders bevorzugt Maleinsäure und deren Derivate wie Maleinsäureanhydrid.

Die Dicarbonsäuren (A₂) lassen sich entweder als solche oder in Form von Derivaten einsetzen.

Unter Derivaten der Dicarbonsäuren (A₂) werden hierbei bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen C₁-C₄-Alkylkomponenten, besonders bevorzugt gemischte Methylethylester.

Unter diesen sind die Anhydride und die Mono- oder Dialkylester bevorzugt, besonders bevorzugt sind die Anhydride und die Mono- oder Di-C₁-C₄-alkylester und ganz besonders bevorzugt sind die Anhydride.

C₁-C₄-Alkyl bedeutet im Rahmen dieser Schrift Methyl, Ethyl, iso-Propyl, n-Propyl, n-Butyl, iso-Butyl, sek-Butyl und tert-Butyl, bevorzugt Methyl, Ethyl und n-Butyl, besonders bevorzugt Methyl und Ethyl und ganz besonders bevorzugt Methyl.

Im Rahmen der vorliegenden Erfindung ist es auch möglich, ein Gemisch aus einer Dicarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Dicarbonsäuren einzusetzen.

Bevorzugt werden für die verzweigten Polyester mit Sulfonatgruppen als tri- oder höherfunktionelle Alkohole (By mit y gleich 3 oder höher)

Glycerin, Trimethylolmethan, Trimethylolethan, Trimethylolpropan, Bis(trimethylolpropan), Trimethylolbutan, Trimethylolpentan, 1,2,4-Butantriol, 1,2,6-Hexantriol, Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Tris(hydroxymethyl)isocyanurat, Tris(hydroxyethyl)isocyanurat (THEIC), Tris(hydroxypropyl)isocyanurat,

Zucker oder Zuckeralkohole wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, oder Inosit

tri- oder höherfunktionelle Polyetherole auf Basis tri- oder höherfunktioneller Alkohole, die durch Umsetzung mit Ethylenoxid, Propylenoxid und/oder Butylenoxid, besonders bevorzugt mit Propylenoxid, erhalten werden
oder tri- oder höherfunktionelle Polyesterole auf Basis tri- oder höherfunktioneller Alkohole, die durch Umsetzung mit Caprolacton erhalten werden
eingesetzt.

Besonders bevorzugt werden hierbei als tri- oder höherfunktionelle Alkohole (By mit y gleich 3 oder höher)

Glycerin, Diglycerin, Triglycerin, Trimethylolethan, Trimethylolpropan, Di(trimethylolpropan), Pentaerythrit, Sucrose oder Sorbit sowie deren Polyetherole auf Basis von Ethylenoxid und/oder Propylenoxid
und insbesondere
Glycerin, Diglycerin, Triglycerin, Trimethylolethan, Trimethylolpropan, Pentaerythrit oder deren Polyetherole auf Basis von Propylenoxid
eingesetzt.

Bevorzugt werden für die verzweigten Polyester mit Sulfonatgruppen als difunktionelle Carbonsäuren (C₂) ohne α,β-olefinisch ungesättigte Bindungen
aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cis- und trans-Cyclohexan-1,2-dicarbonsäure, cis- und transCyclohexan-1,3-dicarbonsäure, cis- und trans-Cyclohexan-1,4-dicarbonsäure, cis- und transCyclopentan-1,2-dicarbonsäure, cis- und trans-Cyclopentan-1,3-dicarbonsäure,
aromatische Dicarbonsäuren, wie Phthalsäure, Isophthalsäure oder Terephthalsäure
eingesetzt.

Die genannten Dicarbonsäuren können auch substituiert sein mit einem oder mehreren Resten, ausgewählt aus
C₁-C₂₀-Alkylgruppen, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, Trimethylpentyl, n-Nonyl, n-Decyl, n-Dodecyl, n-Tetradecyl, n-Hexadecyl, n-Octadecyl, oder n-Eicosyl,
C₂-C₂₀-Alkenylgruppen, beispielsweise Butenyl, Hexenyl, Octenyl, Decenyl, Dodecenyl, Tetradecenyl, Hexadecenyl, Octadecenyl oder Eicosenyl,
C₃-C₁₂-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden oder
C₆-C₁₄-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren oder deren Derivate seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, 3,3-Dimethylglutarsäure, Dodecenylbernsteinsäure, Hexadecenylbernsteinsäure, Octadecenylbernsteinsäure sowie Umsetzungsprodukte von Polyisobutylenen mit einem Enophil ausgewählt aus der Gruppe Fumarsäuredichlorid, Fumarsäure, Maleinsäuredichlorid, Maleinsäureanhydrid und/oder Maleinsäure, bevorzugt mit Maleinsäureanhydrid oder Maleinsäuredichlorid, besonders bevorzugt mit Maleinsäureanhydrid, zu mit Polyisobutylen substituierten Bemsteinsäurederivaten, worin die Polyisobutylenylgruppe ein zahlenmittleres Molekulargewicht Mₙ von 100 bis 100000 Dalton aufweisen kann. Diese Umsetzung erfolgt nach den dem Fachmann bekannten Verfahren und bevorzugt wie beschrieben in den deutschen Offenlegungsschriften DE-A 195 19 042, dort bevorzugt von S. 2, Z. 39 bis S. 4, Z. 2 und besonders bevorzugt von S. 3, Z. 35 - 58, und DE-A 43 19 671, dort bevorzugt von S. 2, Z. 30 bis Z. 68, und DE-A 43 19 672, dort bevorzugt von S. 2, Z. 44 bis S. 3, Z. 19, beschriebenen Verfahren zur Umsetzung von Polyisobutylenen mit Enophilen.

Weiterhin lassen sich Gemische von zwei oder mehreren der vorgenannten Dicarbonsäuren einsetzen. Beispielsweise können ein bis sechs, bevorzugt ein bis vier, besonders bevorzugt ein bis drei, ganz besonders bevorzugt ein bis zwei und insbesondere eine Dicarbonsäure eingesetzt werden.

Die Dicarbonsäuren lassen sich entweder als solche oder in Form von Derivaten einsetzen.

Unter Derivaten werden bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen C₁-C₄-Alkylkomponenten, besonders bevorzugt gemischte Methylethylester.

Unter diesen sind die Anhydride und die Mono- oder Dialkylester bevorzugt, besonders bevorzugt sind die Anhydride und die Mono- oder Di-C₁-C₄-alkylester und ganz besonders bevorzugt sind die Anhydride.

Besonders bevorzugt werden für die verzweigten Polyester mit Sulfonatgruppen als difunktionelle Carbonsäuren (C₂) ohne α,β-olefinisch ungesättigte Bindungen aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, Dodecenylbernsteinsäure, Hexadecenylbernsteinsäure oder Octadecenylbernsteinsäure
eingesetzt.

Bevorzugt werden für die verzweigten Polyester mit Sulfonatgruppen als difunktionelle Alkohole (B₂) ohne α,β-olefinisch ungesättigte Bindungen
Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol, 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Isosorbid, Dipropylenglykol, Tripropylenglykol,
Polyethylenglykole HO(CH₂CH₂O)ₙ-H, Polypropylenglykole HO(CH[CH₃]CH₂O)ₙ-H, Polybutylenglykole HO(CH[CH₃]CH₂CH₂O)ₙ-H, wobei n eine ganze Zahl und n ≥ 4, bevorzugt n eine ganze Zahl aus dem Bereich von 4 bis 40, besonders bevorzugt von 4 bis 20 ist, Polyethylenpolypropylenglykole, wobei die Abfolge der Ethylenoxid- der Propylenoxid-Einheiten blockweise oder statistisch sein kann,
oder Polytetramethylenglykole, Poly-1,3-propandiole oder Polycaprolactone mit einem Molekulargewicht von bis zu 5000 g/mol, vorzugsweise mit einem Molekulargewicht bis zu 2000 g/mol
eingesetzt.

Besonders bevorzugt werden hierbei als difunktionelle Alkohole (B₂)
Polyethylenglykole HO(CH₂CH₂O)ₙ-H, Polypropylenglykole HO(CH[CH₃]CH₂O)ₙ-H, Polybutylenglykole HO(CH[CH₃]CH₂CH₂O)ₙ-H, wobei n eine ganze Zahl und n ≥ 4, bevorzugt n eine ganze Zahl aus dem Bereich von 4 bis 40, besonders bevorzugt von 4 bis 20 ist,
oder Polytetramethylenglykole, Poly-1,3-propandiole oder Polycaprolactone mit einem Molekulargewicht von bis zu 5000 g/mol, vorzugsweise mit einem Molekulargewicht bis zu 2000 g/mol eingesetzt.

In einer bevorzugten Ausführungsform beruhen die verzweigten Polyester mit Sulfonatgruppen auf einer Anzahl von unterschiedlichen Komponenten A, B, C und D, die kleiner oder gleich 4 ist, d.h. in Schritt a. werden 4 oder weniger verschiedene Komponenten A, B, C und D eingesetzt. Bevorzugt ist die Anzahl verschiedener Komponenten A, B, C und D gleich 3. Selbstverständlich beträgt die Anzahl verschiedener Komponenten A, B, C und D mindestens 2.

Bevorzugt ist für die verzweigten Polyester mit Sulfonatgruppen die Menge an Komponente A größer als 20 Mol-%, bevorzugt größer als 30 Mol-%, besonders bevorzugt größer als 50 Mol-% bezogen auf die Gesamtmenge an Carbonsäuren der Komponenten A und C zusammen.

Eine weitere Ausführungsform der Erfindung ist durch Gemische der erfindungsgemäßen verzweigten Polyester mit Sulfonatgruppen gegeben. Solche Gemische enthalten neben den verzweigten Polyestern der Erfindung weitere Bestandteile wie Lösungsmittel oder Tenside. Bei diesen Gemischen handelt es sich bevorzugt um Wasch- und Reinigungsmittelformulierungen.

Die Wasch- und Reinigungsmittelformulierungen, in denen die erfindungsgemäßen verzweigten Polyester mit Sulfonatgruppen eingesetzt werden können, sind pulver-, granulat-, tabletten-, pasten-, gelförmig oder flüssig. Beispiele hierfür sind Vollwaschmittel, Feinwaschmittel, Colorwaschmittel, Wollwaschmittel, Gardinenwaschmittel, Baukastenwaschmittel, Waschtabletten, bar soaps, Fleckensalze, Wäschestärken und -steifen, Bügelhilfen. Sie enthalten mindestens 0,1 Gew.-%, bevorzugt zwischen 0,1 und 10 Gew.-% und besonders bevorzugt 0,2 bis 3 Gew.-% der erfindungsgemäßen verzweigten Polyester mit Sulfonatgruppen. Die Formulierungen sind je nach ihrer vorgesehenen Anwendung in ihrer Zusammensetzung der Art der zu waschenden Textilien oder der zu reinigenden Oberflächen anzupassen. Sie enthalten konventionelle Wasch- und Reinigungsmittelinhaltsstoffe, wie sie dem Stand der Technik entsprechen. Repräsentative Beispiele für solche Wasch- und Reinigungsmittelinhaltsstoffe werden im Folgenden beschrieben.

Die Gesamtkonzentration von Tensiden in der fertigen Wasch- und Reinigungsmittelformulierung kann von 0,1 bis 99 Gew.-%, bevorzugt von 5 bis 80 Gew.-%, besonders bevorzugt von 10 bis 50 Gew.-% betragen. Die verwendeten Tenside können anionisch, nichtionisch, amphoter und kationisch sein. Es können auch Mischungen der genannten Tenside verwendet werden. Bevorzugte Wasch- und Reinigungsmittelformulierungen enthalten anionische und/oder nichtionische Tenside und deren Mischungen mit weiteren Tensiden.

Entsprechende Tenside sind aus dem Stand der Technik bekannt und werden beispielsweise in der EP 1 035 194 A2 (Abschnitte [0021] bis [0047]) beschrieben.

Bei diesen Gemischen handelt es sich bevorzugt um Textilhilfsmittel, Wasch- und Reinigungsmittel für Textilien, Additive für Wasch- und Reinigungsmittel von Textilen, Waschhilfsmittel, Wäschenachbehandlungsmittel oder Reinigungs-, Spül- oder Waschmittel für harte Oberflächen. Die verzweigten Polyester der Erfindung können nach dem Fachmann bekannten Verfahren direkt in die Formulierungen (Gemische) in ihren verschiedenen Darreichungsformen eingearbeitet werden. Hierbei sind feste Formulierungen wie Pulver, Granulate, Tabletten, Pasten, Gele und flüssige Formulierungen zu nennen.

Ein weiterer Gegenstand der Erfindung ist daher die Verwendung der erfindungsgemäßen verzweigten Polyester mit Sulfonatgruppen oder deren Gemische als Schmutzlösepolymere, bevorzugt als Textilhilfsmittel, Wasch- und Reinigungsmittel für Textilien, Additive für Wasch- und Reinigungsmittel von Textilen, Waschhilfsmittel, Wäschenachbehandlungsmittel oder Reinigungs-, Spül- oder Waschmittel für harte Oberflächen. Die verzweigten Polyester mit Sulfonatgruppen werden hierbei als sogenannte "soil release" Polymere oder "soil repellants" eingesetzt, und verleihen den behandelten Oberflächen schmutzabweisende Eigenschaften. Insbesondere führen die erfindungsgemäßen verzweigten Polyester mit Sulfonatgruppen zur Erhöhung der Reinigungsleistung von Wasch- und Reinigungsmitteln gegenüber öligen und fettigen Anschmutzungen.

Ein weiterer Gegenstand der Erfindung ist die Verwendung der erfindungsgemäßen verzweigten Polyester mit Sulfonatgruppen oder deren Gemische als Vergrauungsinhibitoren, bevorzugt bei textilen Geweben (Textilien). Die verzweigten Polyester mit Sulfonatgruppen werden hierbei als sogenannte "anti greying" Polymere eingesetzt, und sorgen dafür, dass der von der Faser abgelöste Schmutz in der Waschflotte suspendiert bleibt und nicht wieder auf das textile Gewebe aufzieht. Insbesondere führen die erfindungsgemäßen verzweigten Polyester mit Sulfonatgruppen zu einer Vergrauungsinhibierung bei textilen Geweben enthaltend Polyester. Insbesondere eignen sich die erfindungsgemäßen verzweigten Polyester mit Sulfonatgruppen als Vergrauungsinhibitoren für Flüssigwaschmittel.

Ein weiterer Gegenstand der Erfindung ist die Verwendung der erfindungsgemäßen verzweigten Polyester mit Sulfonatgruppen in wässrigen Lösungen oder Zubereitungen zur Erzielung eines Soil Release Finish auf Textilien.

Eine bevorzugte Ausführungsform der erfindungsgemäßen Gemische ist gegeben durch eine Reinigungsformulierung enthaltend als Komponenten:
a) von 0,1 bis 20 Gew.-% mindestens eines erfindungsgemäßen Polymers
b) von 5 bis 80 Gew.-% Tenside
c) von 0,1 bis 50 Gew.-% Builder
d) von 0 - 30 Gew.-% Bleichsystem
e) 0 - 20 Gew.-% nichtwässrige Lösemittel
f) weitere Hilfsmittel, wie Alkaliträger, Entschäumer, Enzyme (z. B. Lipasen, Proteasen,, Amylasen, Cellulasen), Entschäumer, Farbstoffe, Duftstoffe, weitere zusätzliche Vergrauungsinhibitoren, Farbübertragungsinhibitoren, Verdicker, Löslichkeitsvermittler und Wasser.

Die Summe der Komponenten aus a) bis f) ergibt 100 Gew.-%

Die Mengenverhältnisse der einzelnen Komponenten werden vom Fachmann abhängig vom jeweiligen Einsatzgebiet der Reinigungsformulierung eingestellt.

Als nichtionische Tenside (Niotenside) werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen oder verzweigten Resten aus Alkoholen nativen oder petrochemischen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂-C₁₄-Alkohole mit 3 EO, 5 EO, 7 EO oder 9 EO, C₉-C₁₁-Alkohol mit 7 EO, C₁₃-C₁₅-Alkohole mit 3 EO, 5 EO, 7 EO oder 9 EO, C₁₂-C₁₈-Alkohole mit 3 EO, 5 EO, 7 EO oder 9 EO und Mischungen aus diesen, wie Mischungen aus C₁₂-C₁₄-Alkohol mit 3 EO und C₁₂-C₁₈-Alkohol mit 7 EO, 2 Propylheptanol mit 3 bis 9 EO. Mischungen aus kurkettigen Alkoholethoxilaten (z. B. 2-Propylheptanol x 7 EO) und langkettigen Alkoholethoxilaten (z. B. C16,18 x 7 EO). Die angegebenen Ethoxylierungsgrade stellen statistische Mittelwerte (Zahlenmittel, Mn) dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO-und PO-Gruppen zusammen im Molekül enthalten, sind einsetzbar. Hierbei können Blockcopo-lymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen- und Propylenoxid auf Fettalkohole erhältlich.

Außerdem können als weitere nichtionische Tenside auch Alkylglykoside der allgemeinen Formel (1)

R¹O(G)ₓ (1)

eingesetzt werden, worin R¹ für einen primären geradkettigen oder methylverzweigten, insbesondere in 2-Stellung methylverzweigten aliphatischen Rest mit 8 bis 22, vorzugsweise 12 bis 18 C-Atomen steht und G für eine Glykosideinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO-A-90/13533 beschriebenen Verfahren hergestellt werden.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge (Gewicht) dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (2), 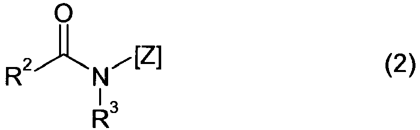 worin R²C(=O) für einen aliphatischen Acylrest mit 6 bis 22 Kohlenstoffatomen, R³ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (3) 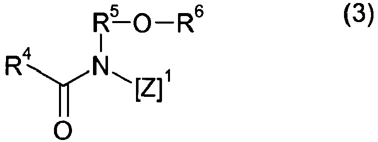 worin R⁴ für einen linearen oder verzweigten Alkyl- oder Alkenylrest mit 7 bis 12 Kohlenstoffatomen, R⁵ für einen linearen, verzweigten oder cyclischen Alkylenrest mit 2 bis 8 Kohlenstoffatomen oder einen Arylenrest mit 6 bis 8 Kohlenstoffatomen und R⁶ für einen linearen, verzweigten oder cyclischen Alkylrest oder einen Arylrest oder einen Oxy-Alkylrest mit 1 bis 8 Kohlenstoffatomen steht, wobei C₁-C₄-Alkyl- oder Phenylreste bevorzugt sind, und [Z]¹ für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. [Z]¹ wird vorzugsweise durch reduktive Aminierung eines Zuckers erhalten, beispielsweise Glucose, Fructose, Maltose, Lactose, Galactose, Mannose oder Xylose. Die N-Alkoxyoder N-Aryloxy-substituierten Verbindungen können dann beispielweise gemäß WO-A-95/07331 durch Umsetzung mit Fettsäuremethylestern in Gegenwart eines Alkoxids als Katalysator in die gewünschten Polyhydroxyfettsäureamide überführt werden.

Der Gehalt an nichtionischen Tensiden beträgt in den flüssigen Wasch- oder Reinigungsmitteln bevorzugt von 5 bis 40 Gew.-%, vorzugsweise von 7 bis 30 Gew.-% und insbesondere von 9 bis 25 Gew.- %, jeweils bezogen auf das gesamte Mittel.

Als anionische Tenside werden beispielsweise solche vom Typ der Sulfonate und Sulfate eingesetzt. Als Tenside vom Sulfonat-Typ kommen dabei vorzugsweise C₉-C₁₃-Alkylbenzolsulfonate, Olefinsulfonate, d.h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂-C₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), zum Beispiel die α-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN® erhalten werden können, sind geeignete Aniontenside.

Auch die Schwefelsäuremonoester der mit 1 bis 6 Mol Ethylenoxid ethoxylierten geradkettigen oder verzweigten C₇-C₂₁-Alkohole, wie 2-Methyl-verzweigte C₉-C₁₁-Alkohole mit im Durchschnitt 3,5 Mol Ethylenoxid (EO) oder C₁₂-C₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobemsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈-C₁₈-Fettalkoholreste oder Mischungen aus diesen. Insbesondere bevorzugte Sulfosuccinate enthalten einen Fettalkoholrest, der sich von ethoxylierten Fettalkoholen ableitet. Dabei sind wiederum Sulfosuccinate, deren Fettalkohol-Reste sich von ethoxylierten Fettalkoholen mit engerr Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Der Gehalt bevorzugter flüssiger Wasch- oder Reinigungsmittel an anionischen Tensiden beträgt von 2 bis 50 Gew.-%, vorzugsweise von 4 bis 40 Gew.-% und insbesondere von 5 bis 35 Gew.-%, jeweils bezogen auf das gesamte Mittel. Es ist besonders bevorzugt, dass die Menge an Fettsäureseife mindestens 2 Gew.-% und besonders bevorzugt mindestens 4 Gew.-% und insbesondere bevorzugt mindestens 6 Gew.-% beträgt.

Zusätzlich zu dem erfindungsgemaesen Polymer und zu dem/den Tensid(en) können die flüssigen Wasch oder Reinigungsmittel weitere Inhaltsstoffe enthalten, die die anwendungstechnischen und/oder ästhetischen Eigenschaften des flüssigen Wasch- oder Reinigungsmittels weiter verbessern. In der Regel enthalten bevorzugte Mittel zusätzlich zu dem erfindungsgemäßen Polymer und zu Tensid(en) einen oder mehrere Stoffe aus der Gruppe der Verdicker, Gerüststoffe, Bleichmittel, Bleichaktivatoren, Enzyme, Elektrolyte, nichtwässrigen Lösungsmittel, pH-Stellmittel, Duftstoffe, Parfümträger, Fluoreszenzmittel, Farbstoffe, Hydrotope, Schauminhibitoren, Silikonöle, Antiredepositionsmittel, optischen Aufheller, weitere zusätzliche Vergrauungsinhibitoren, Einlaufverhinderer, Knitterschutzmittel, Farbübertragungsinhibitoren, antimikrobiellen Wirkstoffe, Germizide, Fungizide, Antioxidantien, Korrosionsinhibitoren, Antistatika, Bügelhilfsmittel, Phobier- und Imprägniermittel, Quell- und Schiebefestmittel sowie UV-Absorber.

Als Verdicker können sogenannte Assoziativverdicker verwendet werden. Beispiele für Verdicker sind in WO 2009/019225 A2, EP-A 0 013 836 oder WO 2006/016035 beschrieben.

Als Gerüststoffe bzw. Builder, die in den flüssigen Wasch- oder Reinigungsmitteln enthalten sein können, sind insbesondere Silikate, Aluminiumsilikate (insbesondere Zeolithe), Carbonate, Salze organischer Di- und Polycarbonsäuren sowie Mischungen dieser Stoffe zu nennen.

Geeignete niedermolekulare Polycarboxylate als organische Builder sind beispielsweise:
C₄-C₂₀-Di-, -Tri- und -Tetracarbonsäuren wie z.B. Bernsteinsäure, Propantricarbonsäure, Butantetracarbonsäure, Cyclopentantetracarbonsäure und Alkyl- und Alkylenbernsteinsäuren mit C₂-C₁₆-Alkyl- bzw. -Alkylen-Resten;
C₄-C₂₀-Hydroxycarbonsäuren wie z.B. Äpfelsäure, Weinsäure, Gluconsäure, Glutarsäure, Citronensäure, Lactobionsäure und Saccharosemono-, -di- und -tricarbonsäure;
Aminopolycarboxylate wie z.B. Nitrilotriessigsäure, Methylglycindiessigsäure, Alanindiessigsäure, Ethylendiamintetraessigsäure und Serindiessigsäure, N,N-bis(carboxylatomethyl)-L-glutamat (GLDA);
Salze von Phosphonsäuren wie z.B. Hydroxyethandiphosphonsäure, Ethylendiamintetra(methylenphoshponat) und Diethylentriaminpenta(methylenphosphat).

Geeignete oligomere oder polymere Polycarboxylate als organische Builder sind beispielsweise:
Oligomaleinsäuren, wie sie beispielsweise in EP-A 0 451 508 und EP-A 0 396 303 beschrieben sind;
Co- und Terpolymere ungesättigter C₄-C₈-Dicarbonsäuren, wobei als Comonomere monoethylenisch ungesättigte Monomere
aus der Gruppe (i) in Mengen von bis zu 95 Gew.-%
   aus der Gruppe (ii) in Mengen von bis 60 Gew.-%
   aus der Gruppe (iii) in Mengen von bis zu 20 Gew.-%
einpolymerisiert enthalten sein können.

Als ungesättigte C₄-C₈-Dicarbonsäuren sind hierbei beispielsweise Maleinsäure, Fumarsäure, Itaconsäure und Citraconsäure (Methylmaleinsäure) geeignet. Bevorzugt ist Maleinsäure.

Die Gruppe (i) umfasst monoethylenisch ungesättigte C₃-C₈-Monocarbonsäuren wie z.B. Acrylsäure, Methacrylsäure, Crotonsäure und Vinylessigsäure. Bevorzugt werden aus der Gruppe (i) Acrylsäure und Methacrylsäure eingesetzt.

Die Gruppe (ii) umfasst monoethylenisch ungesättigte C₂-C₂₂-Olefine, Vinylalkylether mit C₁-C₈-Alkylgruppen, Styrol, Vinylester von C₁-C₈-Carbonsäure, (Meth)acrylamid und Vinylpyrrolidon. Bevorzugt werden aus der Gruppe (ii) C₂-C₆-Olefine, Vinylalkylether mit C₁-C₄-Alkylgruppen, Vinylacetat und Vinylpropionat eingesetzt.

Die Gruppe (iii) umfasst (Meth)acrylester von C₁-C₈-Alkoholen, (Meth)acrylnitril, (Meth)acrylamide, (Meth)acrylamide von C₁-C₈-Aminen, N-Vinylformamid und Vinylimidazol.

Falls die Polymeren der Gruppe (ii) Vinylester einpolymerisiert enthalten, können dieses auch teilweise oder vollständig zu Vinylalkohol-Struktureinheiten hydrolysiert vorliegen. Geeignete Co- und Terpolymere sind beispielsweise aus US 3,887,806 sowie SE-A 43 13 909 bekannt.

Als Copolymere von Dicarbonsäuren eignen sich als organische Builder vorzugsweise:
Copolymere von Maleinsäure und Acrylsäure im Gewichtsverhältnis 10:90 bis 95:5, insbesondere bevorzugt solche im Gewichtsverhältnis 30:70 bis 90:10 mit Molmassen von 10000 bis 150000;
Terpolymere aus Maleinsäure, Acrylsäure und einem Vinylester einer C₁-C₃-Carbonsäure im Gewichtsverhältnis 10 (Maleinsäure) : 90 (Acrylsäure + Vinylester) bis 95 (Maleinsäure) : 10 (Acrylsäure + Vinylester), wobei das Gew.-Verhältnis von Acrylsäure zu Vinylester im Bereich von 20:80 bis 80:20 variieren kann, und besonders bevorzugt
Terpolymere aus Maleinsäure, Acrylsäure und Vinylacetat oder Vinylpropionat im Gewichtsverhältnis 20 (Maleinsäure) : 80 (Acrylsäure + Vinylester) bis 90 (Maleinsäure) : 10 (Acrylsäure + Vinylester), wobei das Gew.-Verhältnis von Acrylsäure zum Vinylester im Bereich von 30:70 bis 70:30 variieren kann;
Copolymere von Maleinsäure mit C₂-C₈-Olefinen im Molverhältnis 40:60 bis 80:20, wobei Copolymere von Maleinsäure mit Ethylen, Propylen oder Isobutan im Molverhältnis 50:50 besonders bevorzugt sind.

Pfropfpolymere ungesättigter Carbonsäuren auf niedermolekulare Kohlenhydrate oder hydrierte Kohlenhydrate, vgl. US 5,227,446, DE-A 44 15 623, DE-A 43 13 909, sind ebenfalls als organische Builder geeignet.

Geeignete ungesättigte Carbonsäuren sind hierbei beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die in Mengen von 40 bis 95 Gew.-%, bezogen auf die zu pfropfende Komponente, aufgepfropft werden.

Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomere der Gruppen (ii) und (iii).

Als Pfropfgrundlage sind abgebaute Polysaccharide wie z.B. saure oder enzymatisch abgebaute Stärken, Inuline oder Zellulose, reduzierte (hydrierte oder hydrierend aminierte) abgebaute Polysaccharide wie z.B. Mannit, Sorbit, Aminosorbit und Glucamin geeignet sowie Polyalkylenglycole mit Molmassen bis zu M_{w} = 5000 g/mol (Gewichtsmittel) wie z.B. Polyethylenglycole, Ethylenoxid/Propylenoxid- bzw. Ethylenoxid/Butylenoxid-Blockcopolymere, statistische Ethylenoxid/Popylenoxid- beziehungsweise Ethylenoxid/Butylenoxid-Copolymere, alkoxylierte ein- oder mehrbasische C₁-C₂₂-Alkohole, vgl. US 4,746,456.

Bevorzugt werden aus dieser Gruppe gepfropfte abgebaute beziehungsweise abgebaute reduzierte Stärken und gepfropfte Polyethylenoxide eingesetzt, wobei 20 bis 80 Gew.-% Monomere bezogen auf die Pfropfkomponente bei der Pfropfpolymerisation eingesetzt werden. Zur Pfropfung wird vorzugsweise eine Mischung von Maleinsäure und Acrylsäure im Gew.-Verhältnis von 90:10 bis 10:90 eingesetzt.

Polyglyoxylsäuren als organische Builder sind beispielsweise beschrieben in EP-B 0 001 004, US 5,399,286, DE-A 41 06 355 und EP-A 0 656 914. Die Endgruppen der Polyglyoxylsäuren können unterschiedliche Strukturen aufweisen.

Polyamidocarbonsäuren und modifizierte Polyamidocarbonsäuren als organische Builder sind beispielsweise bekannt aus EP-A 0 454 126, EP-B 0 511 037, WO-A 94/01486 und EP-A 0 581 452.

Vorzugsweise verwendet man als organische Builder auch Polyasparaginsäure oder Cokondensate der Asparaginsäure mit weiteren Aminosäuren, C₄-C₂₅-Mono- oder -Dicarbonsäuren und/oder C₄-C₂₅-Mono- oder -Diaminen. Besonders bevorzugt werden in phosphorhaltigen Säuren hergestellte, mit C₆-C₂₂-Mono- oder -Dicarbonsäuren beziehungsweise mit C₆-C₂₂-Monooder -Diaminen modifizierte Polyasparaginsäuren eingesetzt.

Kondensationsprodukte der Citronensäure mit Hydroxycarbonsäuren oder Polyhydroxyverbindungen als organische Builder sind z.B. bekannt aus WO-A 93/22362 und WO-A 92/16493. Solche Carboxylgruppen enthaltende Kondensate haben üblicherweise Molmassen M_{w} bis zu 10000, vorzugsweise bis zu 5000.

Unter den als Bleichmittel dienenden, in Wasser H₂O₂ liefernden Verbindungen haben das Natriumperborattetrahydrat und das Natriumperboratmonohydrat besondere Bedeutung. Weitere brauchbare Bleichmittel sind beispielsweise Natriumpercarbonat, Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure.

Um beim Waschen bei Temperaturen von 60 °C und darunter eine verbesserte Bleichwirkung zu erreichen, können Bleichaktivatoren in die Wasch- oder Reinigungsmittel eingearbeitet werden. Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU)1 N-Acylimide, insbesondere N-Nonanoylsuccinimid (NOSI), acylierte Phenolsulfonate, insbesondere n-Nonanoyloder Isononanoyloxybenzolsulfonat (nbzw. iso-NOBS), Carbonsäureanhydride, insbsondere Phthalsäureanhydrid, acylierte mehrwertige Alkohole, insbesondere Triacetin, Ethylenglykoldiacetat und 2,5-Diacetoxy-2,5- dihydrofuran.

Zusätzlich zu den konventionellen Bleichaktivatoren oder an deren Stelle können auch sogenannte Bleichkatalysatoren in die flüssigen Wasch- oder Reinigungsmittel eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder - carbonylkomplexe. Auch Mn-, Fe-, Co-, Ru-, Mo-, Ti-, V- und Cu-Komplexe mit stickstoffhaltigen Tripod-Liganden sowie Co-, Fe-, Cu- und Ru-Aminkomplexe sind als Bleichkatalysatoren verwendbar.

Als Enzyme kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen wie protein-, fett- oder stärkehaltigen Verfleckungen und Vergrauungen bei. Cellulasen und andere Glykosylhydrolasen können darüber hinaus durch das Entfernen von Pilling und Mikrofibrillen zur Farberhaltung und zur Erhöhung der Weichheit des Textils beitragen. Zur Bleiche bzw. zur Hemmung der Farbübertragung können auch Oxireduktasen eingesetzt werden. Besonders gut geeignet sind aus Bakterienstämmen oder Pilzen wie Bacillus subtilis, Bacillus licheniformis, Streptomyceus griseus und Humicola insolens gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere α-Amylasen, Iso-Amylasen, Pullulanasen und Pektinasen. Als Cellulasen werden vorzugsweise Cellobiohydrolasen, Endoglucanasen und β-Glucosidasen, die auch Cellobiasen genannt werden, bzw. Mischungen aus diesen eingesetzt. Da sich verschiedene Cellulase-Typen durch ihre CMCaseund Avicelase-Aktivitäten unterscheiden, können durch gezielte Mischungen der Cellulasen die gewünschten Aktivitäten eingestellt werden.

Die Enzyme können an Trägerstoffe adsorbiert sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,12 bis etwa 2,5 Gew.-% betragen, bezogen auf die Gesamtformulierung.

Als Elektrolyte aus der Gruppe der anorganischen Salze kann eine breite Anzahl der verschiedensten Salze eingesetzt werden. Bevorzugte Kationen sind die Alkali- und Erdalkalimetalle, bevorzugte Anionen sind die Halogenide und Sulfate. Aus herstellungstechnischer Sicht ist der Einsatz von NaCl oder MgCl₂ in den Mitteln bevorzugt. Der Anteil an Elektrolyten in den Mitteln beträgt üblicherweise 0,5 bis 5 Gew.-%.

Nichtwässrige Lösungsmittel, die in den flüssigen Wasch- oder Reinigungsmitteln eingesetzt werden können, stammen beispielsweise aus der Gruppe ein- oder mehrwertigen Alkohole, Alkanolamine oder Glykolether, sofern sie im angegebenen Konzentrationsbereich mit Wasser mischbar sind. Vorzugsweise werden die Lösungsmittel ausgewählt aus Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Ethylenglykolmono-n-butylether, Diethylenglykol-methylether, Diethylenglykolethylether, Propylenglykolmethyl-, -ethyl- oder -propylether, Dipropylenglykolmonomethyl- oder - ethylether, Di-isopropylenglykolmonomethyl- oder -ethylether, Methoxy-, Ethoxy- oder Butoxytriglykol, i-Butoxyethoxy-2-propanol, 3-Methyl-3-methoxybutanol, Propylen-glykol-t-butylether sowie Mischungen dieser Lösungsmittel. Nichtwässrige Lösungsmittel können in den flüssigen Wasch- oder Reinigungsmitteln in Mengen zwischen 0,5 und 20 Gew.-%, bevorzugt aber unter 12 Gew.-% und insbesondere unterhalb von 9 Gew.-% eingesetzt werden bezogen auf die Gesamtformulierung.

Um den pH-Wert der flüssigen Wasch- oder Reinigungsmittel in den gewünschten Bereich zu bringen, kann der Einsatz von pH-Stellmitteln angezeigt sein. Einsetzbar sind hier sämtliche bekannten Säuren bzw. Laugen, sofern sich ihr Einsatz nicht aus anwendungstechnischen oder ökologischen Gründen bzw. aus Gründen des Verbraucherschutzes verbietet. Üblicherweise überschreitet die Menge dieser Stellmittel 7 Gew.-% der Gesamtformulierung nicht.

Um den ästhetischen Eindruck der flüssigen Wasch- oder Reinigungsmittel zu verbessern, können sie mit geeigneten Farbstoffen eingefärbt werden. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber Textilfasern, um diese nicht anzufärben.

Als Schauminhibitoren, die in den flüssigen Wasch- oder Reinigungsmitteln eingesetzt werden können, kommen beispielsweise Seifen, Paraffine oder Silikonöle in Betracht, die gegebenenfalls auf Trägermaterialien aufgebracht sein können.

Optische Aufheller (sogenannte "Weißtöner") können den flüssigen Wasch- oder Reinigungsmitteln zugesetzt werden, um Vergrauungen und Vergilbungen der behandelten Textilen Flächengebilden zu beseitigen. Diese Stoffe ziehen auf die Faser auf und bewirken eine Aufhellung und vorgetäuschte Bleichwirkung, indem sie unsichtbare Ultraviolettstrahlung in sichtbares längerwelliges Licht umwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiß ergibt. Geeignete Verbindungen stammen beispielsweise aus den Substanzklassen der 4,4'-Diamino-2,2'-stilbendisulfonsäuren (Flavonsäuren), 4,4'-Distyrylbiphenylen, Methylumbelliferone, Cumarine, Dihydrochinolinone, 1,3- Diarylpyrazoline, Naphthalsäureimide, Benzoxazol-, Benzisoxazol- und Benzimidazol-Systeme sowie der durch Heterocyclen substituierten Pyrenderivate. Die optischen Aufheller werden üblicherweise in Mengen zwischen 0,03 und 0,3 Gew.-%, bezogen auf das fertige Mittel, eingesetzt.

Weitere zusätzliche Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise Leim, Gelatine, Salze von Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, zum Beispiel abgebaute Stärke, Aldehydstärken usw. Auch Polyvinylpyrrolidon ist brauchbar. Bevorzugt werden jedoch Celluloseether wie Carboxymethylcellulose (Na-Salz), Methylcellulose, Hydroxyalkylcellulose und Mischether wie Methylhydroxyethylcellulose, Methylhydroxypropylcellulose, Methylcarboxy-methylcellulose und deren Gemische in Mengen von 0,1 bis 5 Gew.-%, bezogen auf die Mittel, eingesetzt.

Da textile Flächengebilde, insbesondere aus Reyon, Zellwolle, Baumwolle und deren Mischungen, zum Knittern neigen können, weil die Einzelfasern gegen Durchbiegen, Knicken, Pressen und Quetschen quer zur Faserrichtung empfindlich sind, können die Mittel synthetische Knitterschutzmittel enthalten. Hierzu zählen beispielsweise synthetische Produkte auf der Basis von Fettsäuren, Fettsäureestern, Fettsäureamiden, Fettalkylolestern, Fettalkylolamiden oder Fettalkoholen, die meist mit Ethylenoxid umgesetzt sind, oder Produkte auf der Basis von Lecithin oder modifizierter Phosphorsäureester.

Zur Bekämpfung von Mikroorganismen können die flüssigen Wasch- oder Reinigungsmittel antimikrobielle Wirkstoffe enthalten. Hierbei unterscheidet man je nach antimikrobiellem Spektrum und Wirkungsmechanismus zwischen Bakteriostatika und Bakteriziden, Fungistatika und Fungiziden usw. Wichtige Stoffe aus diesen Gruppen sind beispielsweise Benzalkoniumchloride, Alkylarylsulfonate, Halogenphenole und Phenolmercuriacetat.

Um unerwünschte, durch Sauerstoffeinwirkung und andere oxidative Prozesse verursachte Veränderungen an den flüssigen Wasch- oder Reinigungsmitteln und/oder den behandelten textilen Flächengebilden zu verhindern, können die Mittel Antioxidantien enthalten. Zu dieser Verbindungsklasse gehören beispielsweise substituierte Phenole, Hydrochinone, Brenzcatechine und aromatische Amine sowie organische Sulfide, Polysulfide, Dithiocarbamate, Phosphite und Phosphonate.

Ein erhöhter Tragekomfort kann aus der zusätzlichen Verwendung von Antistatika resultieren, die den Mitteln zusätzlich beigefügt werden. Antistatika vergrößern die Oberflächenleitfähigkeit und ermöglichen damit ein verbessertes Abfließen gebildeter Ladungen. Äußere Antistatika sind in der Regel Substanzen mit wenigstens einem hydrophilen Molekülliganden und geben auf den Oberflächen einen mehr oder minder hygroskopischen Film. Diese zumeist grenzflächenaktiven Antistatika lassen sich in stickstoffhaltige (Amine, Amide, quartäre Ammoniumverbindungen), phosphorhaltige (Phosphorsäureester) und schwefelhaltige (Alkylsulfonate, Alkylsulfate) Antistatika unterteilen. Externe Antistatika sind beispielsweise in den Patentanmeldungen FR 1,156,513, GB 873 214 und GB 839 407 beschrieben. Die hier beschriebenen Lauryl- (bzw. Stearyl-) dimethylbenzylammoniumchloride eignen sich als Antistatika für textile Flächengebilde bzw. als Zusatz zu Waschmitteln, wobei zusätzlich ein Avivageeffekt erzielt wird.

Zur Verbesserung des Wasserabsorptionsvermögens, der Wiederbenetzbarkeit der behandelten textilen Flächengebilde und zur Erleichterung des Bügelns der behandelten textilen Flächengebilde können in den flüssigen Wasch- oder Reinigungsmitteln beispielsweise Silikonderivate eingesetzt werden. Diese verbessern zusätzlich das Ausspülverhalten der Mittel durch ihre schauminhibierenden Eigenschaften. Bevorzugte Silikonderivate sind beispielsweise Polydialkyl- oder Alkylarylsiloxane, bei denen die Alkylgruppen ein bis fünf C-Atome aufweisen und ganz oder teilweise fluoriert sind. Bevorzugte Silikone sind Polydimethylsiloxane, die gegebenenfalls derivatisiert sein können und dann aminofunktionell oder quaterniert sind bzw. Si-OH-, Si-H und/oder Si-Cl-Bindungen aufweisen. Die Viskositäten der bevorzugten Silikone liegen bei 25 °C im Bereich zwischen 100 und 100 000 mPas, wobei die Silikone in Mengen zwischen 0,2 und 5 Gew.-%, bezogen auf das gesamte Mittel eingesetzt werden können.

Schließlich können die flüssigen Wasch- oder Reinigungsmittel auch UV-Absorber enthalten, die auf die behandelten textilen Flächengebilde aufziehen und die Lichtbeständigkeit der Fasern verbessern. Verbindungen, die diese gewünschten Eigenschaften aufweisen, sind beispielsweise die durch strahlungslose Desaktivierung wirksamen Verbindungen und Derivate des Benzophenons mit Substituenten in 2- und/oder 4-Stellung. Weiterhin sind auch substituierte Benzotriazole, in 3-Stellung Phenylsubstituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet.

Um die durch Schwermetalle katalysierte Zersetzung bestimmter Waschmittel-Inhaltsstoffe zu vermeiden, können Stoffe eingesetzt werden, die Schwermetalle komplexieren. Geeignete Schwermetallkomplexbildner sind beispielsweise die Alkalisalze der Ethylendiamintetraessigsäure (EDTA), der Nitrilotriessigsäure (NTA) oder Methylglycindiessigsäure (MGDA) sowie Alkalimetallsalze von anionischen Polyelektrolyten wie Polymaleaten und Polysulfonaten.

Eine bevorzugte Klasse von Komplexbildnern sind die Phosphonate, die in bevorzugten flüssigen Wasch- oder Reinigungsmitteln in Mengen von 0,01 bis 2,5 Gew.-%, vorzugsweise 0,02 bis 2 Gew.-% und insbesondere von 0,03 bis 1 ,5 Gew.-% enthalten sind. Zu diesen bevorzugten Verbindungen zählen insbesondere Organophosphonate wie beispielsweise 1-Hydroxyethan-1 ,1-diphosphonsäure (HEDP), Aminotri(methylenphosphonsäure) (ATMP), Diethylentriaminpenta(methylenphosphonsäure) (DTPMP bzw. DETPMP) sowie 2-Phosphonobutan-1,2,4tricarbonsäure (PBS-AM), die zumeist in Form ihrer Ammonium- oder Alkalimetallsalze eingesetzt werden.

Die erhaltenen wässrigen flüssigen Wasch- oder Reinigungsmittel weisen keinen Bodensatz auf; in einer bevorzugten Ausführungsform sind sie transparent oder zumindest transluzent. Vorzugsweise weisen die wässrigen flüssigen Wasch- oder Reinigungsmittel eine Transmission des sichtbaren Lichtes von mindestens 30%, vorzugsweise 50%, insbesondere bevorzugt 75%, am meisten bevorzugt 90% auf. Alternativ können die erfindungsgemäßen Polymere in opake Wasch- oder Reinigungsmittel eingearbeitet werden.

Neben diesen Bestandteilen kann ein wässriges Wasch- oder Reinigungsmittel dispergierte Partikel, deren Durchmesser entlang ihrer größten räumlichen Ausdehnung 0,01 bis 10 000 µm beträgt, enthalten.

Partikel können Mikrokapseln als auch Granulate, Compounds und Duftperlen sein, wobei Mikrokapseln bevorzugt sind.

Unter dem Begriff "Mikrokapsel" werden Aggregate verstanden, die mindestens einen festen oder flüssigen Kern enthalten, der von mindestens einer kontinuierlichen Hülle, insbesondere einer Hülle aus Polymer(en), umschlossen ist. Üblicherweise handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Bevorzugt sind einkernige Mikrokapseln mit einer kontinuierlichen Hülle. Die Hülle kann aus natürlichen, halbsynthetischen oder synthetischen Materialien bestehen. Natürlich Hüllmaterialien sind beispielsweise Gummi arabicum, Agar Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon. Im Inneren der Mikrokapseln können empfindliche, chemisch oder physikalisch inkompatible sowie flüchtige Komponenten (= Wirkstoffe) des wässrigen flüssigen Wasch- oder Reinigungsmittels lager- und transportstabil eingeschlossen werden. In den Mikrokapseln können sich beispielsweise optische Aufheller, Tenside, Komplexbildner, Bleichmittel, Bleichaktivatoren, Färbund Duftstoffe, Antioxidantien, Gerüststoffe, Enzyme, Enzym-Stabilisatoren, antimikrobielle Wirkstoffe, Vergrauungsinhibitoren, Antiredepositionsmittel, pH-Stellmittel, Elektrolyte, Schauminhibitoren und UV-Absorber befinden.

Die Mikrokapseln können ferner kationische Tenside, Vitamine, Proteine, Konservierungsmittel, Waschkraftverstärker oder Perlglanzgeber enthalten. Die Füllungen der Mikrokapseln können Feststoffe oder Flüssigkeiten in Form von Lösungen oder Emulsionen bzw. Suspensionen sein.

Die Mikrokapseln können im herstellungsbedingten Rahmen eine beliebige Form aufweisen, sie sind jedoch bevorzugt näherungsweise kugelförmig. Ihr Durchmesser entlang ihrer größten räumlichen Ausdehnung kann je nach den in ihrem Inneren enthaltenen Komponenten und der Anwendung zwischen 0,01 µm (visuell nicht als Kapsel erkennbar) und 10 000 µm liegen. Bevorzugt sind sichtbare Mikrokapseln mit einem Durchmesser im Bereich von 100 µm bis 7 000 µm, insbesondere von 400 µm bis 5 000 µm. Die Mikrokapseln sind nach bekannten Verfahren zugänglich, wobei der Koazervation und der Grenzflächenpolymerisation die größte Bedeutung zukommt. Als Mikrokapseln lassen sich sämtliche auf dem Markt angebotenen tensidstabilen Mikrokapseln einsetzen, beispielsweise die Handelsprodukte (in Klammern angegeben ist jeweils das Hüllmaterial) Hallcrest Microcapsules (Gelatine, Gummi Arabicum), Coletica Thalaspheres (maritimes Collagen), Lipotec Millicapseln (Alginsäure, Agar-Agar), Induchem Unispheres (Lactose, mikrokristalline Cellulose, Hydroxypropylmethylcellulose); Unicerin C30 (Lactose, mikrokristalline Cellulose, Hydroxypropylmethylcellulose), Kobo Glycospheres (modifizierte Stärke, Fettsäureester, Phospholipide), Softspheres (modifiziertes Agar Agar) und Kuhs Probiol Nanospheres (Phospholipide).

Alternativ können auch Partikel eingesetzt werden, die keine Kem-Hülle-Struktur aufweisen, sondern in denen der Wirkstoff in einer Matrix aus einem matrix-bildenden Material verteilt ist. Solche Partikel werden auch als "Speckies" bezeichnet.

Ein bevorzugtes matrix-bildendes Material ist Alginat. Zur Herstellung Alginat-basierter Speckies wird eine wässrige Alginat-Lösung, welche auch den einzuschließenden Wirkstoff bzw. die einzuschließenden Wirkstoffe enthält, vertropft und anschließend in einem Ca²⁺-lonen oder Al³⁺-lonen enthaltendem Fällbad ausgehärtet.

Alternativ können anstelle von Alginat andere, matrix-bildende Materialien eingesetzt werden. Beispiele für matrix-bildende Materialien umfassen Polyethylenglykol, Polyvinylpyrrolidon, Polymethacrylat, Polylysin, Poloxamer, Polyvinylalkohol, Polyacrylsäure, Polyethylenoxid, Polyethoxyoxazolin, Albumin, Gelatine, Acacia, Chitosan, Cellulose, Dextran, Ficoll®, Stärke, Hydroxyethylcellulose, Hydroxypropylcellulose, Hydroxypropylmethylcellulose, Hyaluronsäure, Carboxymethylcellulose, Carboxymethylcellulose, deacetyliertes Chitosan, Dextransulfat und Derivate dieser Materialien. Die Matrixbildung erfolgt bei diesen Materialien beispielsweise über Gelierung, Polyanion-Polykation-Wechselwirkungen oder Polyelektrolyt-MetallionWechselwirkungen. Die Herstellung von Partikeln mit diesen matrixbildenden Materialien ist an sich bekannt.

Die Partikel können stabil in den wässrigen flüssigen Wasch- oder Reinigungsmittel dispergiert werden. Stabil bedeutet, dass die Mittel bei Raumtemperatur und bei 40 °C über einen Zeitraum von mindestens 4 Wochen und bevorzugt von mindestens 6 Wochen stabil sind, ohne dass die Mittel aufrahmen oder sedimentieren. Die erfindungsgemäßen Polymere bewirken durch die Viskositätserhöhung eine kinetische Verlangsamung der Sedimentation der Partikel und somit deren Stabilisierung im Schwebezustand.

Die Freisetzung der Wirkstoffe aus den Mikrokapseln oder Speckies erfolgt üblicherweise während der Anwendung der sie enthaltenden Mittel durch Zerstörung der Hülle bzw. der Matrix infolge mechanischer, thermischer, chemischer oder enzymatischer Einwirkung.

Die erfindungsgemäßen verzweigten Polyester mit Sulfonatgruppen, die in wäßrigen Textilwaschflotten in Konzentrationen zwischen etwa 1 bis etwa 180 ppm verwendet werden, bevorzugt in Konzentrationen zwischen etwa 30 bis etwa 90 ppm, bewirken eine effektive reinigende und schmutzablösende Behandlung und Inhibierung der Vergrauung insbesondere für Polyester, Polyesterbaumwollmischungen und andere synthetische Gewebe.

Die Textilwaschflotten sind vorzugsweise alkalisch mit einem pH-Bereich zwischen etwa 7 bis 10 etwa 11, insbesondere zwischen etwa 7,5 bis etwa 10,5, wobei typische Waschmittelinhaltsstoffe zugegen sind. Überraschenderweise, insbesondere insoweit als der pH-Wert und anionische oberflächenaktive Verbindungen betroffen sind, können die üblicherweise in Wasch- und Reinigungsmitteln enthaltenen Detergenzien auch in den erfindungsgemäßen Reinigungsmitteln in den Mengen verwendet werden, wie es dem Stand der Technik entspricht. Sie erfüllen dabei ihren üblichen Zweck, d.h. beispielsweise das Reinigen oder Bleichen von Gewebe, ohne daß sie einen nachteiligen Effekt auf die schmutzablösenden Eigenschaften der erfindungsgemäßen Polyester mit Sulfonatgruppen aufweisen. Die erfindungsgemäßen Polyester mit Sulfonatgruppen können zur Erzielung eines Soil Release Finish auch in handelsüblichen Wäscheweichspülem für die Haushaltsanwendung eingesetzt werden. Diese enthalten im Wesentlichen weichmachende Komponenten, Co-Weichmacher, Emulgatoren, Parfüme, Farbstoffe und Elektrolyte, und sind auf einen sauren pH-Wert von unterhalb 7, bevorzugt zwischen 3 und 5, eingestellt.

Ein weiterer Gegenstand der Erfindung ist ein Verfahren zur Herstellung von verzweigten Polyestern mit Sulfonatgruppen, umfassend
1. die Umsetzung der Komponenten A, B, optional C und optional D zu verzweigten Polyestern, wobei
   i. die Komponente A gewählt wird aus der Gruppe der α,β-olefinisch ungesättigten Dicarbonsäuren (A₂), und
   ii. die Komponente B gewählt wird aus der Gruppe der tri- oder höherfunktionellen Alkohole (By),
   iii. die optionale Komponente C gewählt wird aus der Gruppe der difunktionellen Alkohole (B₂) oder der difunktionellen Carbonsäuren (C₂) ohne α,β-olefinisch ungesättigte Bindungen,
   iv. die optionale Komponente D gewählt wird aus Fettsäuren oder Fettalkoholen,
2. und der anschließenden Umsetzung der in (a.) erhaltenen verzweigten Polyester mit Hydrogensulfit, wobei die molare Menge an Hydrogensulfit höchstens 95 Mol-%, bezogen auf die Menge an α,β-olefinisch ungesättigter Dicarbonsäure (A₂) beträgt.

Schritt 1. des erfindungsgemäßen Verfahrens kann in Substanz oder in Gegenwart eines Lösemittels durchgeführt werden. Als Lösemittel geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders Ether geeignet, wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauern führt.

In einer bevorzugten Ausführungsform wird die Reaktion frei von Lösungsmittel durchgeführt.

Zur Durchführung des Schritt 1. im erfindungsgemäßen Verfahren kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4 Å, MgSO₄ und Na₂SO₄. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Man kann Schritt 1. des erfindungsgemäßen Verfahrens in Abwesenheit von Katalysatoren durchführen. Vorzugsweise arbeitet man jedoch in Gegenwart von mindestens einem Katalysator. Dies sind bevorzugt saure anorganische, metallorganische oder organische Katalysatoren oder Gemische aus mehreren sauren anorganischen, metallorganischen oder organischen Katalysatoren.

Als saure Katalysatoren werden im Rahmen dieser Schrift auch Lewis-Säuren angesehen, also solche Verbindungen gemäß Römpps Chemie-Lexikon, Stichwort "Säure-Base-Begriff", die ein Elektronenpaar in die Valenzschale eines ihrer Atome aufnehmen können.

Als saure anorganische Katalysatoren im Sinne der vorliegenden Erfindung sind beispielsweise Schwefelsäure, Sulfate und Hydrogensulfate, wie Natriumhydrogensulfat, Phosphorsäure, Phosphonsäure, hypophosphorige Säure, Aluminiumsulfathydrat, Alaun, saures Kieselgel (pH ≤ 6, insbesondere ≤ 5) und saures Aluminiumoxid zu nennen. Weiterhin sind beispielsweise Alumiumverbindungen der allgemeinen Formel Al(OR¹)₃ und Titanate der allgemeinen Formel Ti(OR¹)₄ als saure anorganische Katalysatoren einsetzbar, wobei die Reste R¹ jeweils gleich oder verschieden sein können und unabhängig voneinander gewählt sind aus

C₁-C₂₀-Alkylresten, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl, n-Decyl, n-Dodecyl, n-Hexadecyl oder n-Octadecyl.

C₃-C₁₂-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R¹ in Al(OR¹)₃ bzw. Ti(OR¹)₄ jeweils gleich und gewählt aus n-Butyl, Isopropyl, 2-Ethylhexyl, n-Octyl, Decyl oder Dodecyl.

Bevorzugte saure metallorganische Katalysatoren sind beispielsweise gewählt aus Dialkylzinnoxiden R¹₂SnO oder Dialkylzinndiestern R¹₂Sn(OR²)₂ wobei R¹ wie oben stehend definiert ist und gleich oder verschieden sein kann.

R² kann die gleichen Bedeutungen haben wie R¹ und zusätzlich C₆-C₁₂-Aryl sein, beispielsweise Phenyl, o-, m- oder p-Tolyl, Xylyl oder Naphthyl. R² kann jeweils gleich oder verschieden sein.

Beispiele für zinnorganische Katalysatoren sind Zinn(II)-n-octanoat, Zinn-(II)-2-ethylhexanoat, Zinn-(II)-laurat, Dibutylzinnoxid, Diphenylzinnoxid, Dibutylzinndichlorid, Dibutylzinndiacetat, Dibutylzinndilaurat, Dibutylzinndimaleat oder Dioctylzinndiacetat. Denkbar sind auch antimon-, wismut- oder aluminiumorganische Katalysatoren.

Besonders bevorzugte Vertreter für saure metallorganische Katalysatoren sind Dibutylzinnoxid, Diphenylzinnoxid und Dibutylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure lonentauscher als saure organische Katalysatoren einsetzen, beispielsweise sulfonsäuregruppen-haltige Polystyrolharze, die mit etwa
2 mol-% Divinylbenzol vernetzt sind.

Man kann auch Kombinationen von zwei oder mehreren der vorgenannten Katalysatoren einsetzen. Auch ist es möglich, solche organischen oder metallorganischen oder auch anorganischen Katalysatoren, die in Form diskreter Moleküle vorliegen, in immobilisierter Form, zum Beispiel an Kieselgel oder an Zeolithen, einzusetzen.

Wünscht man saure anorganische, metallorganische oder organische Katalysatoren einzusetzen, so setzt man bevorzugt 1 bis 10000 ppm Katalysator, besonders bevorzugt 2 bis 5000 ppm, bezogen auf die Gesamtmasse der hydroxy- und der carboxygruppenhaltigen Verbindungen, ein.

Wünscht man saure anorganische, metallorganische oder organische Katalysatoren einzusetzen, so wird das Verfahren erfindungsgemäß bei Temperaturen von 60 bis 140 °C durchgeführt. Vorzugsweise arbeitet man bei Temperaturen von 80 bis 140 °C, besonders bevorzugt bei 100 bis 130 °C.

Es ist erfindungsgemäß auch möglich, als Katalysatoren Enzyme einzusetzen, wenn deren Einsatz auch weniger bevorzugt ist.

Dafür einsetzbare Enzyme sind beispielsweise ausgewählt unter Hydrolasen (E.C. 3.-.-.-), und unter diesen besonders unter den Esterasen (E.C. 3.1.-.-), Lipasen (E.C. 3.1.1.3), Glykosylasen (E.C. 3.2.-.-) und Proteasen (E.C. 3.4.-.-) in freier oder auf einem Träger chemisch oder physikalisch immobilisierter Form, bevorzugt Lipasen, Esterasen oder Proteasen und besonders bevorzugt Esterasen (E.C. 3.1.-.-). Ganz besonders bevorzugt sind Novozyme 435 (Lipase aus *Candida antarctica* B) oder Lipase aus Alcaligenes sp., Aspergillus sp., Mucor sp., Penicilium sp., Geotricum sp., Rhizopus sp., Burkholderia sp., Candida sp., Pseudomonas sp., Thermomyces sp. oder Schweinepankreas, insbesondere bevorzugt sind Lipase aus *Candida antarctica* B oder aus Burkholderia sp. Die aufgeführten Enzyme sind kommerziell erhältlich, beispielsweise bei Novozymes Biotech Inc., Dänemark.

Der Enzymgehalt im Reaktionsmedium liegt in der Regel im Bereich von etwa 0,1 bis 10 Gew.-%, bezogen auf die Summe der eingesetzten Komponenten

Wünscht man als Katalysatoren Enzyme einzusetzen, so wird Schritt 1. des Verfahren erfindungsgemäß bei Temperaturen von 20 und bis 120 °C, bevorzugt 20 bis 100 °C und besonders bevorzugt 20 bis 80 °C durchgeführt.

Das erfindungsgemäße Verfahren wird vorzugsweise unter Inertgasatmosphäre, d.h. einem unter den Reaktionsbedingungen inerten Gas, durchgeführt, beispielsweise unter Kohlendioxid, Verbrennungsgasen, Stickstoff oder Edelgas, unter denen insbesondere Argon zu nennen ist.

Die Druckbedingungen des erfindungsgemäßen Verfahrens sind in der Regel unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei verringertem oder Atmosphärendruck, besonders bevorzugt bei Atmosphärendruck.

Die Umsetzungsdauer des erfindungsgemäßen Verfahrens beträgt üblicherweise 10 Minuten bis 48 Stunden, bevorzugt 30 Minuten bis 24 Stunden und besonders bevorzugt 1 bis 12 Stunden.

Nach beendeter Reaktion in Schritt 1. lassen sich die hochfunktionellen verzweigten Polyester leicht isolieren, beispielsweise durch Abfiltrieren des Katalysators und gegebenenfalls Abziehen des Lösemittels, wobei man das Abziehen des Lösemittels üblicherweise bei vermindertem Druck durchführt. Weitere gut geeignete Aufarbeitungsmethoden sind Ausfällen des Polymeren nach Zugabe von Wasser und anschließendes Waschen und Trocknen.

Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 bis 50 Gew-%, bevorzugt 0,5 bis 25 Gew-%, besonders bevorzugt 1 bis 10 Gew-% bei Temperaturen von beispielsweise 10 bis 140 °C, bevorzugt 20 bis 130 °C und besonders bevorzugt 30 bis 120 °C unterworfen werden.

Dies kann durch Zugabe des pulver- oder granulatförmigen Entfärbungsmittels zum Reaktionsgemisch und nachfolgender Filtration oder durch Überleiten des Reaktionsgemisches über eine Schüttung des Entfärbungsmittels in Form beliebiger, geeigneter Formkörper erfolgen.

Die Entfärbung des Reaktionsgemisches kann an beliebiger Stelle des Aufarbeitungsverfahrens erfolgen, beispielsweise auf der Stufe des rohen Reaktionsgemisches oder nach gegebenenfalls erfolgter Vorwäsche, Neutralisation, Wäsche oder Lösungsmittelentfernung.

Das Reaktionsgemisch kann weiterhin einer Vorwäsche und/oder einer Neutralisation und/oder einer Nachwäsche unterworfen werden, bevorzugt lediglich einer Neutralisation. Gegebenenfalls können Neutralisation und Vorwäsche in der Reihenfolge auch vertauscht werden.

Aus der wässrigen Phase der Wäsche und/oder Neutralisation können enthaltene Wertprodukte durch Ansäuern und Extraktion mit einem Lösungsmittel zumindest teilweise wiedergewonnen und von Neuem eingesetzt werden.

Verfahrenstechnisch können für eine Wäsche oder Neutralisation im erfindungsgemäßen Verfahren alle an sich bekannten Extraktions- und Waschverfahren und -apparate eingesetzt werden, z.B. solche, die in Ullmann's Encyclopedia of Industrial Chemistry, 6th ed, 1999 Electronic Release, Kapitel: Liquid - Liquid Extraction - Apparatus, beschrieben sind. Beispielsweise können dies ein- oder mehrstufige, bevorzugt einstufige Extraktionen, sowie solche in Gleich- oder Gegenstromfahrweise, bevorzugt Gegenstromfahrweise sein.

In einer bevorzugten Ausführung kann jedoch auf eine Wäsche, Neutralisierung und Entfärbung verzichtet werden.

Schritt 2. des erfindungsgemäßen Verfahrens zur Sulfonierung der Polyester kann in Substanz oder in Gegenwart eines Lösemittels durchgeführt werden. Als Lösemittel geeignet sind beispielsweise Wasser oder Alkohole.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauern führt.

Schritt 2. des erfindungsgemäßen Verfahrens wird bei Temperaturen von 60 bis 150°C durchgeführt. Vorzugsweise arbeitet man bei Temperaturen von 80 bis 120, besonders bevorzugt bei von 90 bis 110°C.

Bevorzugt wird der Polyester bei Reaktionstemperatur als rührfähige Schmelze vorgelegt und dann mit einer wässrigen Lösung des Sulfonierungsreagenzes versetzt.

Als Sulfonierungsreagenz können Lösungen der Alkali- oder Erdalkalisalze der schwefligen Säure (Hydrogensulfite) verwendet werden. Die Konzentration der Lösungen beträgt von 10 bis 90 Gew.-%, bevorzugt von 20 bis 50 Gew.-% und ganz besonders bevorzugt von 30 bis 45 Gew.-%.

Bevorzugt werden wässrige Lösungen von Natrium-, Kalium- oder Magnesiumhydrogensulfit eingesetzt. Ganz besonders bevorzugt wässrige Lösungen von Natriumhydrogensulfilt.

Alternativ kann eine saure wässrige Lösung von Natriumthiosulfat verwendet werden, welches in Hydrogensulfit disproportioniert.

Die Umsetzungsdauer im Schritt 2. des erfindungsgemäßen Verfahrens beträgt üblicherweise 10 Minuten bis 48 Stunden, bevorzugt 30 Minuten bis 24 Stunden und besonders bevorzugt 1 bis 3 Stunden.

Die Reaktion ist beendet, wenn im Reaktionsgemisch kein Hydrogensulfit mehr nachgewiesen werden kann. Während der Umsetzung kann der Verbrauch des Hydrogensulfits im Reaktionsgemisch qualitativ oder quantitativ verfolgt werden.
Zur qualitativen Verfolgung eignet sich beispielsweise die Behandlung einer Probe des Reaktionsgemisches mit verdünnter Kaliumpermanganat-Lösung und nachfolgende Zugabe von Bariumchloridlösung. Vorhandenes Hydrogensulfit wird dabei erst durch Permanganat zu Sulfat oxidiert welches bei Kontakt mit Bariumionen als schwerlösliches Bariumsulfat ausfällt. Es ist zu beachten, dass der Nachweis durch Reaktion des Kaliumpermanganats mit Maleinsäure-Doppelbindungen gestört werden kann.

Zur quantitativen Verfolgung der Reaktion eignet sich eine iodometrische Bestimmung des Sulfits, wie beispielsweise beschrieben in Gerhard Schulze, Jürgen Simon "Jander/Jahr Maßanalyse", 17. Auflage 2009, de Gruyter, Berlin, S. 187.

Die vorliegende Erfindung stellt verzweigte Polyester mit Sulfonatgruppen zur Verfügung, die sich vorteilhaft für Reinigungszwecke von Textilien unter Vermeidung von Redepositionseffekten einsetzen lassen. Diese polymeren Effektstoffe, die eine geringe Toxizität aufweisen, sind mittels eines technisch relativ einfachen und preiswerten Verfahrens herstellbar und lassen sich leicht in Formulierungen für Reinigungszwecke in ihren verschiedenen Darreichungsformen einarbeiten.

Die Erfindung wird durch die Beispiele näher erläutert ohne dass die Beispiele den Gegenstand der Erfindung einschränken.

### Beispiele:

MSA = Maleinsäureanhydrid
TMP = Trimethylolpropan
TMP x n PO = Umsetzungsprodukt von TMP mit
   n molarem Überschuss an Propylenoxid
ASA = Octadecenylbemsteinsäure
DBTL = Dibutylzinndilaurat
Ti(OBu)₄ = Titantetrabutylat

x% NaHSO₃ bedeutet, dass in der Sulfonierungsreaktion genau die Menge an NaHSO₃ eingesetzt wurde, die erforderlich ist, um x% (der Anzahl) der theoretisch im Polymer enthaltenen α,β-olefinisch ungesättigten Doppelbindungen zu sulfonieren.

Die Molekulargewichte der unsulfonierten Polyester wurden durch Gelpermeationschromatographie (GPC) bestimmt (Säulenkombination: 2 x PLgel 3 µm MIXED-E und 1 x ResiPore 3 µm; Standard: Polymethylmethacrylat (PMMA); Eluent: THF).

Die Säurezahlen (mg KOH/g Polymer) wurden entsprechend DIN 53402 bestimmt.

### Polymer 1: MSA : TMP x 15,7 PO

In einen 2000 ml-Rundkolben, ausgestattet mit Rührer, Innenthermometer, Gaseinleitungsrohr und absteigendem Kühler mit Auffanggefäß wurden 98,3 g MSA, 1040,4 g TMP x 15,7 PO und 0,35 g Ti(OBu)₄ eingewogen und unter Rühren auf 180 °C erhitzt. Die Reaktionsmischung wurde unter Abscheidung von Reaktionswasser für 14 h bei 180 °C gerührt, bis die GPC-Kontrolle ein gewichtsmittleres Molekulargewicht von 7300 g/mol anzeigte. Anschließend wurde die Reaktion durch Abkühlen auf Raumtemperatur beendet.
Das Produkt wurde in Form eines braunen wasserunlöslichen Harzes erhalten.

Folgende Kennzahlen wurden bestimmt:
Säurezahl = 24 mg KOH/g Polymer
Mₙ = 1890 g/mol, M_{w} = 8390 g/mol

### Sulfonierung Polymer 1:

In einen Rundkolben, ausgestattet mit Rührer, Innenthermometer, Gaseinleitungsrohr und Rückflusskühler wurde Polymer 1 mit wässriger NaHSO₃-Lösung (39 %ig) versetzt, die Mischung auf 100 °C erhitzt und für 5h bei dieser Temperatur gerührt. Nachfolgend wurde das nun homogene Reaktionsgemisch auf Raumtemperatur abgekühlt und mittels 50%iger Kaliumhydroxidlösung auf einen pH-Wert von pH = 5 eingestellt. Die Reaktionsmischung wurde in eine Aluschale überführt und durch Trocknen im Vakuumtrockenschrank (70 °C) getrocknet. Es wurden braune wachsartige Produkte erhalten.

| | Ansatz | | | Produkt | | |
|---|---|---|---|---|---|---|
| Sulfoniertes Polymer | % NaHSO₃ bezogen auf MSA | Menge Polymer 1 [g] | Menge NaHSO₃-(39 %ig in H₂O) [g] | SZ [mg KOH/ g] | Farbe | Wasserlöslichkeit |
| 1a | 75% | 500,0 | 84,0 | 6 | Braun | opak |
| 1b | 50% | 105,5 | 11,7 | 9 | Braun | opak |
| 1c | 30% | 150,0 | 10,3 | 8 | Braun | opak |

### Polymer 2: MSA : TMP x 15,7 PO

In einen 2000 ml-Rundkolben, ausgestattet mit Rührer, Innenthermometer, Gaseinleitungsrohr und absteigendem Kühler mit Auffanggefäß wurden 98,5 g MSA, 1051 g TMP x 15,7 PO und 0,35 g DBTL eingewogen und unter Rühren auf 180 °C erhitzt. Die Reaktionsmischung wurde unter Abscheidung von Reaktionswasser für 10 h bei 180 °C gerührt, bis die GPC-Kontrolle ein gewichtsmittleres Molekulargewicht von 9300 g/mol anzeigte. Anschließend wurde die Reaktion durch Abkühlen auf Raumtemperatur beendet.
Das. Produkt wurde in Form eines gelben wasserunlöslichen Harzes erhalten.
Folgende Kennzahlen wurden bestimmt:
Säurezahl = 28 mg KOH/g Polymer
Mₙ = 2980 g/mol, Mm = 10400 g/mol

### Sulfonierung Polymer 2:

In einen Rundkolben, ausgestattet mit Rührer, Innenthermometer, Gaseinleitungsrohr und Rückflusskühler wurde Polymer 2 mit wässriger NaHSO₃-Lösung (39 %ig) versetzt, die Mischung auf 100 °C erhitzt und für 5h bei dieser Temperatur gerührt. Nachfolgend wurde das nun homogene Reaktionsgemisch auf Raumtemperatur abgekühlt und mittels 50%iger Kaliumhydroxidlösung auf einen pH-Wert von pH = 5 eingestellt. Die Reaktionsmischung wurde in eine Aluschale überführt und durch Trocknen im Vakuumtrockenschrank (70 °C) getrocknet. Es wurden bräunliche wachsartige Produkte erhalten.

| | Ansatz | | | Produkt | | |
|---|---|---|---|---|---|---|
| Sulfoniertes Polymer | % NaHSO₃ bezogen auf MSA | Menge Polymer 1 [g] | Menge NaHSO₃-(39 %ig in H₂O) [g] | SZ [mg KOH/ g] | Farbe | Wasser-löslichkeit |
| 2a* | 90% | 500,0 | 113,0 | 2 | bräunlich | opak |
| 2b | 75% | 510,2 | 89,3 | 2 | bräunlich | opak |

| | | | | | | |
|---|---|---|---|---|---|---|
| * das Molekulargewicht des sulfonierten Polyesters 2a wurde mittels Gelpermeationschromatographie (GPC) bestimmt (Standard: PMMA; Eluent: 0,08 mol/l TRIS-Puffer pH = 7,0 in dest Wasser + 0,15 mol/l NaCl + 0,01 mol/l NaN₃): Mₙ = 5.030 g/mol, M_{w} = 63.800 g/mol. | | | | | | |

### Polymer 3: MSA : TMP x 15,7 PO : ASA

In einen 2000 ml-Rundkolben, ausgestattet mit Rührer, Innenthermometer, Gaseinleitungsrohr und absteigendem Kühler mit Auffanggefäß wurden 73,6 g MSA, 1042,2 g TMP x 15,7 PO und 87,2 g ASA eingewogen und unter Rühren auf 180 °C erhitzt. Als eine homogene Schmelze entstanden war, wurden 0,36 g DBTL als Katalysator zugegeben und die Reaktionsmischung unter Abscheidung von Reaktionswasser bei 160 °C gerührt, bis die GPC-Kontrolle ein gewichtsmittleres Molekulargewicht von 5700 g/mol anzeigte. Anschließend wurde die Reaktion durch Abkühlen auf Raumtemperatur beendet.
Das Produkt wurde in Form eines bräunlichen wasserunlöslichen Harzes erhalten.
Folgende Kennzahlen wurden bestimmt:
Säurezahl = 25 mg KOH/g Polymer
Mm = 1780 g/mol, M_{w} = 6310 g/mol

### Sulfonierung Polymer 3:

In einen Rundkolben, ausgestattet mit Rührer, Innenthermometer, Gaseinleitungsrohr und Rückflusskühler wurde Polymer 3 mit wässriger NaHSO₃-Lösung (39 %ig) versetzt, die Mischung auf 100 °C erhitzt und für 5h bei dieser Temperatur gerührt. Nachfolgend wurde das nun homogene Reaktionsgemisch auf Raumtemperatur abgekühlt und mittels 50%iger Kaliumhydroxidlösung auf einen pH-Wert von pH = 5 eingestellt. Die Reaktionsmischung wurde in eine Aluschale überführt und durch Trocknen im Vakuumtrockenschrank (70 °C) getrocknet. Es wurden orangefarbene wachsartige Produkte erhalten.

| | Ansatz | | | Produkt | | |
|---|---|---|---|---|---|---|
| Sulfoniertes Polymer | % NaHSO₃ bezogen auf MSA | Menge Polymer 1 [g] | Menge NaHSO₃-(39 %ig in H₂O) [g] | SZ [mg KOH/ g] | Farbe | Wasserlöslichkeit |
| 3a | 90% | 150,3 | 22,4 | 16 | orange | opak |
| 3b | 75% | 150,0 | 18,7 | 12 | orange | opak |

### Sulfoniertes Polymer 4: (MSA : TMP x 5,2 PO : ASA) * 75% NaHSO₃

In einen 1000 ml-Rundkolben, ausgestattet mit Rührer, Innenthermometer, Gaseinleitungsrohr und absteigendem Kühler mit Auffanggefäß wurden 93,1 g MSA, 453,6 g TMP x 5,2 PO, 36,7 g ASA eingewogen und unter Rühren auf 160 °C erhitzt. Als eine homogene Schmelze entstanden war, wurden 0,18 g Ti(n-BuO)₄ als Katalysator zugegeben und die Reaktionsmischung unter Abscheidung von Reaktionswasser bei 160 °C gerührt, bis die GPC-Kontrolle ein gewichtsmittleres Molekulargewicht von 9.600 g/mol anzeigte. Anschließend wurde die Reaktionsmischung auf 105 °C abgekühlt und mit 190 g wässriger NaHSO₃-Lösung (39 %ig) versetzt. Anschließend wurde 5h bei 110 °C gerührt, bevor die Reaktionsmischung auf Raumtemperatur abgekühlt wurde. Das Produkt wurde in eine Aluschale überführt und im Vakuumtrockenschrank (70 °C) getrocknet.
Das Produkt wurde in Form eines gelben, wasserlöslichen wachsartigen Feststoffs erhalten.
Folgende Kennzahlen wurden vor der Sulfonierung bestimmt:
Säurezahl = 33 mg KOH/g Polymer
Mₙ = 1860 g/mol, M_{w} = 12400 g/mol
Folgende Kennzahlen wurden bestimmt:
Säurezahl = 7 mg KOH/g Polymer

### Polymer 5: MSA : TMP x 15,7 PO : PolyTHF^{®} 250

In einen 1000 ml-Rundkolben, ausgestattet mit Rührer, Innenthermometer, Gaseinleitungsrohr und absteigendem Kühler mit Auffanggefäß wurden 49,3 g MSA, 419,1 g TMP x 15,7 PO und 31,9 g PolyTHF^{®} 250 (techn., BASF SE) eingewogen und unter Rühren auf 180 °C erhitzt. Als eine homogene Schmelze entstanden war, wurden 0,15 g DBTL als Katalysator zugegeben und die Reaktionsmischung unter Abscheidung von Reaktionswasser bei 180 °C gerührt, bis die GPC-Kontrolle ein gewichtsmittleres Molekulargewicht von 9600 g/mol anzeigte. Anschließend wurde die Reaktion durch Abkühlen auf Raumtemperatur beendet.
Das Produkt wurde in Form eines bräunlichen wasserunlöslichen Harzes erhalten.
Folgende Kennzahlen wurden bestimmt:
Säurezahl = 28 mg KOH/g Polymer
Mₙ = 1900 g/mol, M_{w} = 14800 g/mol

### Sulfonierung Polymer 5:

In einen Rundkolben, ausgestattet mit Rührer, Innenthermometer, Gaseinleitungsrohr und Rückflusskühler wurde Polymer 5 mit wässriger NaHSO₃-Lösung (39 %ig) versetzt, die Mischung auf 100 °C erhitzt und für 5h bei dieser Temperatur gerührt. Nachfolgend wurde das nun homogene Reaktionsgemisch auf Raumtemperatur abgekühlt und mittels 50%iger Kaliumhydroxidlösung auf einen pH-Wert von pH = 5 eingestellt. Die Reaktionsmischung wurde in eine Aluschale überführt und durch Trocknen im Vakuumtrockenschrank (70 °C) getrocknet. Es wurden gelbe wachsartige Produkte erhalten.

| | Ansatz | | | Produkt | | |
|---|---|---|---|---|---|---|
| Sulfoniertes Polymer | % NaHSO₃ bezogen auf MSA | Menge Polymer 1 [g] | Menge NaHSO₃-(39 %ig in H₂O) [g] | SZ [mg KOH/ g] | Farbe | Wasserlöslichkeit |
| 5a | 90% | 150,0 | 36,2 | 19 | gelb | opak |
| 5b | 75% | 150,0 | 30,0 | 20 | gelb | opak |

### Anwendungstests

Die genannten Polymere wurden in einer Konzentration von 5 Gew.-% zu unterschiedlichen Flüssigwaschmittelformulierungen zugesetzt (s. Tabelle 1) und auf ihr Sekundärwaschvermögen getestet. Die Vergrauung (Redeposition) dient als Qualitätsmerkmal zur Beurteilung von Waschmitteln und Waschmittelformulierungen. Diese Prüfung wird eingesetzt bei der Entwicklung und Optimierung von Waschmittelformulierungen oder zur Leistungsbeurteilung von Waschmittelkomponenten.

Der Vergrauungsversuch besteht aus drei Wiederholungswäschen, bei denen in jedem Zyklus gespült wird und frisches Schmutzgewebe eingesetzt wird. Die Weißgewebe werden jeweils wieder verwendet und am Versuchsende bewertet.

### Waschbedingungen

| | |
|---|---|
| Waschgerät | Launder-O-Meter der Fa. Atlas, Chicago, USA |
| Wasserhärte | 2,5 mmol Ca⁺⁺+Mg++/l = 14 °dH |
| Verhältnis Ca:Mg:NaHCO₃ | 4 : 1 : 8 mol |
| Waschtemperatur | 40°C |
| Waschzeit | 30 min (inkl. Aufheizzeit) |
| Waschzyklen | 3 |
| Waschmitteldosierung | 5,0 g/l |
| Flottenverhältnis | 1 : 10 |
| Gesamtflotte | 250 ml |
| Schmutzgewebe | 5 g EMPA 101 Baumwollgewebe mitRuß/Olivenöl-Anschmutzung |
| | 5 g SBL 2004 (Schmutzballastgewebe, wfk) |
| Weißgewebe | Polyester wfK30A und EMPA 407 |
| | Polyamid EMPA 225 und EMPA 406 |
| Ballastgewebe | Baumwolle, Mischgewebe |

Testgewebe sind beispielsweise erhältlich bei der Fa. Wfk-Testgewebe GmbH, Christenfeld 10, D-41379 Brueggen und bei der Fa. EMPA Testmaterialien AGm Möverstrasse 12, CH-9015 St. Gallen.

Nach dem Spülen wird geschleudert und die Gewebe zum Trocknen einzeln aufgehängt.

Zur Ermittlung der Sekundärwaschwirkung wird die Remission des Weißgewebes vor und nach dem Waschen mit einem Photometer ((Elrepho) der Fa. Datacolor AG, CH-8305 Dietikon, Schweiz) gemessen.

Die Remissionswerte werden bei 460 nm ermittelt, wobei jeweils 4 Messpunkte pro Gewebetyp gemittelt werden. Zum Vergleich wurde Testgewebe ohne Zusatz von Polymer gewaschen. Ausgewertet wird delta R (Remission des Weissgewebes gewaschen mit Polymerzusatz - Remission des Weissgewebes gewaschen mit dem Flüssigwaschmittel ohne Polymer), s. Tabelle 2.

**Tabelle 1**

| | Formulierung 1 | Formulierung 2 |
|---|---|---|
| | 20%ig | 20%ig |
| LAS | 10,1 | 7,7 |
| Kokosfettsäure K12-18 | 2,5 | 2,4 |
| KOH | 3,4 | 2,7 |
| Lutensol AO 7 | 5,7 | 8,6 |
| 1,2 Propylenglykol | 6 | 6 |
| Ethanol | 2 | 2 |
| Wasser | auf 90 | auf 90 |

### Herstellung der Formulierungen:

LAS, Fettsäure, Propylenglykol und Wasser werden vorgelegt, auf 40 °C erwärmt und mit KOH (als 50 %ige Lösung) neutralisiert. Nach dem Abkühlen wird Lutensol AO 7 und Ethanol zugegeben.

**Tabelle 2**

| Waschergebnisse in den Formulierungen 1 und 2 auf PES und PA Gewebe | | | | | | | | |
|---|---|---|---|---|---|---|---|---|
| | Formulierung 1 | | Formulierung 2 | | Formulierung 1 | | | Formulierung 2 |
| | Polyestergewebe | | | | Polyamidgewebe | | | |
| | wfk 30 A | EMPA 407 | wfk 30 A | EMPA 407 | EMPA 225 | EMPA 406 | EMPA 225 | EMPA 406 |
| Polymer | delta R | delta R | delta R | delta R | delta R | delta R | delta R | delta R |
| 1a | 7 | 11 | 7 | 8 | 3 | 2 | 2 | 4 |
| 1b | 2 | 7 | 3 | 7 | 2 | 2 | 1 | 2 |
| 1c | 8 | 14 | 6 | 9 | 5 | 4 | 2 | 2 |
| 3a | 6 | 8 | 6 | 9 | 4 | 4 | 2 | 2 |
| 3b | 4 | 9 | 5 | 8 | 2 | 3 | 1 | 3 |
| 5a | 6 | 9 | 6 | 9 | 3 | 3 | 0 | 2 |
| 5b | 6 | 9 | 6 | 9 | 2 | 2 | 0 | 2 |
| 4 | 3 | 5 | 6 | 4 | 1 | -2 | 2 | 3 |
| 2b | 6 | 7 | 8 | 5 | 5 | 3 | 4 | 5 |
| 2a | 6 | 6 | 8 | 4 | 3 | 4 | 3 | 4 |

### Beispiel zu Formulierungsstabilitaeten

Die genannten Polymere wurden in einer Konzentration von 5 Gew.-% zu den Flüssigwaschmittelformulierungen aus Tabelle 1 zugesetzt und 2 Wochen bei 40°C gelagert.

Es zeigten sich keine Eintrübung oder Bodensatz. Eine Überprüfung der gelagerten Proben in einem Waschversuch gegen eine frisch angesetzte Formulierung ergab keine Unterschiede in der Waschleistung.

Texcare SRA-300 F (Hersteller: Clariant GmbH), das als Vergrauungsinhibitor für Polyester eingesetzt werden kann, war unter den gleichen Bedingungen in den genannten Flüssigwaschmittel-Formulierungen nicht stabil einarbeitbar, es führte bei Lagerung zu Trübungen und Bodensatz.

## Patentansprüche

1. Verzweigte Polyester mit Sulfonatgruppen erhältlich durch
a. die Umsetzung der Komponenten A, B, optional C und optional D zu verzweigten Polyestern, wobei
i. die Komponente A gewählt wird aus der Gruppe der α,β-olefinisch ungesättigten Dicarbonsäuren (A₂), und
ii. die Komponente B gewählt wird aus der Gruppe der tri- oder höherfunktionellen Alkohole (By),
iii. die optionale Komponente C gewählt wird aus der Gruppe der difunktionellen Alkohole (B₂) oder der difunktionellen Carbonsäuren (C₂) ohne α,β-olefinisch ungesättigte Bindungen,
iv. die optionale Komponente D gewählt wird aus Fettsäuren oder Fettalkoholen,
b. und der anschließenden Umsetzung der in Schritt a. erhaltenen verzweigten Polyester mit Hydrogensulfit, wobei die molare Menge an Hydrogensulfit höchstens 95 Mol-%, bezogen auf die Menge an α,β-olefinisch ungesättigter Dicarbonsäure (A₂) beträgt.

2. Verzweigte Polyester nach Anspruch 1, wobei der Anteil der tri- oder höherfunktionellen Komponente B in Schritt a. mindestens 30 Mol-% bezogen auf die Gesamtmenge an Komponenten A, B, C und D beträgt

3. Verzweigte Polyester nach den Ansprüchen 1 oder 2, wobei α,β-olefinisch ungesättigte Dicarbonsäuren (A₂) Maleinsäure, Itaconsäure, Fumarsäure, Citraconsäure, Mesaconsäure oder Glutaconsäure sind.

4. Verzweigte Polyester nach den Ansprüchen 1 bis 3, wobei die tri- oder höherfunktionellen Alkohole (By) gewählt werden aus
By (y größer oder gleich 3):
Glycerin, Trimethylolethan, Trimethylolpropan, Bis(trimethylolpropan), 1,2,4-Butantriol, Pentaerythrit, Diglycerin, Triglycerin oder höhere Kondensationsprodukte des Glycerins, Di(trimethylolpropan), Di(pentaerythrit), Zucker wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, oder Inosit,
tri- oder höherfunktionelle Polyetherole auf Basis tri- oder höherfunktioneller Alkohole, die durch Umsetzung mit Ethylenoxid, Propylenoxid und/oder Butylenoxid erhalten werden,
tri- oder höherfunktionelle Polyesterole auf Basis tri- oder höherfunktioneller Alkohole, die durch Umsetzung mit Caprolacton erhalten werden.

5. Verzweigte Polyester nach den Ansprüchen 1 bis 4, wobei difunktionelle Carbonsäuren (C₂) ohne α,β-olefinisch ungesättigte Bindungen gewählt werden aus der Gruppe der
aliphatischen Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cisund trans-Cyclohexan-1,2-dicarbonsäure, cis- und trans-Cyclohexan-1,3dicarbonsäure, cis- und trans-Cyclohexan-1,4-dicarbonsäure, cis- und trans-Cyclopentan-1,2-dicarbonsäure, cis-und trans-Cyclopentan-1,3dicarbonsäure,
aromatischen Dicarbonsäuren, wie Phthalsäure, Isophthalsäure oder Terephthalsäure
wobei die genannten Dicarbonsäuren auch substituiert sein können.

6. Verzweigte Polyester nach den Ansprüchen 1 bis 5, wobei difunktionelle Alkohole (B₂) ohne olefinisch ungesättigte Bindungen gewählt werden aus
B₂: Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol, 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Isosorbid, Dipropylenglykol, Tripropylenglykol, Polyethylenglykole HO(CH₂CH₂O)ₙ-H oder Polypropylenglykole HO(CH[CH₃]CH₂O)ₙ-H, wobei n eine ganze Zahl und n ≥ 4 ist, Polyethylenpolypropylenglykole, wobei die Abfolge der Ethylenoxid- der Propylenoxid-Einheiten blockweise oder statistisch sein kann,
Polytetramethylenglykole, Poly-1,3-propandiole oder Polycarprolactone mit einem Molgewicht von bis zu 5000 g/mol, vorzugsweise mit einem Molgewicht bis zu 2000 g/mol.

7. Verzweigte Polyester nach den Ansprüchen 1 bis 6, wobei die Anzahl der verschiedenen eingesetzten Komponenten A, B, C und D kleiner oder gleich 4 ist.

8. Verzweigte Polyester nach den Ansprüchen 1 bis 7, wobei die Menge an Komponente A größer als 20 Mol-% ist, bezogen auf die Gesamtmenge an Carbonsäuren der Komponenten A und C zusammen.

9. Gemische enthaltend verzweigte Polyester gemäß den Ansprüchen 1 bis 8.

10. Gemische nach Anspruch 9, wobei es sich bei den Gemischen um Textilhilfsmittel, Wasch- und Reinigungsmittel für Textilien, Additive für Wasch- und Reinigungsmittel von Textilen, Waschhilfsmittel, Wäschenachbehandlungsmittel oder Reinigungs-, Spül- oder Waschmittel für harte Oberflächen handelt.

11. Verwendung der verzweigten Polyester gemäß den Ansprüchen 1 bis 8 als Schmutzlösepolymere.

12. Verwendung der verzweigten Polyester gemäß den Ansprüchen 1 bis 8 als Vergrauungsinhibtoren für textile Gewebe.

13. Verwendung nach Anspruch 12, wobei die textilen Gewebe Polyester enthalten.

14. Verwendung der verzweigten Polyester gemäß den Ansprüchen 1 bis 8 in Textilhilfsmitteln, Wasch- und Reinigungsmitteln für Textilien, Additiven für Waschund Reinigungsmittel von Textilien, Waschhilfsmitteln, Wäschenachbehandlungsmitteln oder Reinigungs-, Spül- oder Waschmitteln für harte Oberflächen.

15. Verwendung der verzweigten Polyester gemäß den Ansprüchen 1 bis 8 in wässrigen Lösungen oder Zubereitungen zur Erzielung eines Soil Release Finish auf Textilien.

16. Verfahren zur Herstellung von verzweigten Polyestern mit Sulfonatgruppen, umfassend
a. die Umsetzung der Komponenten A, B, optional C und optional D zu verzweigten Polyestern, wobei
i. die Komponente A gewählt wird aus der Gruppe der α,β-olefinisch ungesättigten Dicarbonsäuren (A₂), und
ii. die Komponente B gewählt wird aus der Gruppe der tri- oder höherfunktionellen Alkohole (B_{y}),
iii. die optionale Komponente C gewählt wird aus der Gruppe der difunktionellen Alkohole (B₂) oder der difunktionellen Carbonsäuren (C₂) ohne α,β-olefinisch ungesättigte Bindungen,
iv. die optionale Komponente D gewählt wird aus Fettsäuren oder Fettalkoholen,
b. und der anschließenden Umsetzung der in Schritt a. erhaltenen verzweigten Polyester mit Hydrogensulfit, wobei die molare Menge an Hydrogensulfit höchstens 95 Mol-%, bezogen auf die Menge an α,β-olefinisch ungesättigter Dicarbonsäure (A₂) beträgt.

## Claims

1. A branched polyester with sulfonate groups obtainable by
a. the reaction of the components A, B, optionally C and optionally D to give branched polyesters, where
i. the component A is selected from the group of α,β-olefinically unsaturated dicarboxylic acids (A₂), and
ii. the component B is selected from the group of tri- or higher-functional alcohols (By),
iii. the optional component C is selected from the group of difunctional alcohols (B₂) or the difunctional carboxylic acids (C₂) without α,β-olefinically unsaturated bonds,
iv. the optional component D is selected from fatty acids or fatty alcohols,
b. and the subsequent reaction of the branched polyesters obtained in step a. with hydrogen sulfite, where the molar amount of hydrogen sulfite is at most 95 mol%, based on the amount of α,β-olefinically unsaturated dicarboxylic acid (A₂).

2. The branched polyester according to claim 1, where the fraction of the tri- or higher-functional component B in step a. is at least 30 mol%, based on the total amount of components A, B, C and D.

3. The branched polyester according to claims 1 or 2, where α,β-olefinically unsaturated dicarboxylic acids (A₂) are maleic acid, itaconic acid, fumaric acid, citraconic acid, mesaconic acid or glutaconic acid.

4. The branched polyester according to claims 1 to 3, where the tri- or higher-functional alcohols (By) are selected from
B_{y} (y greater than or equal to 3):
glycerol, trimethylolethane, trimethylolpropane, bis(trimethylolpropane), 1,2,4-butanetriol, pentaerythritol, diglycerol, triglycerol or higher condensation products of glycerol, di(trimethylolpropane), di(pentaerythritol), sugar, such as, glucose, fructose or sucrose, sugar alcohols such as e.g. sorbitol, mannitol, threitol, erythritol, adonitol (ribitol), arabitol (lyxitol), xylitol, dulcitol (galactitol), maltitol, isomalt, or inositol,
tri- or higher-functional polyetherols based on tri- or higher-functional alcohols, which are obtained by reaction with ethylene oxide, propylene oxide and/or butylene oxide,
tri- or higher-functional polyesterols based on tri- or higher-functional alcohols, which are obtained by reaction with caprolactone.

5. The branched polyester according to claims 1 to 4, where difunctional carboxylic acids (C₂) without α, β-olefinically unsaturated bonds are selected from the group of
aliphatic dicarboxylic acids, such as oxalic acid, malonic acid, succinic acid, glutaric acid, adipic acid, pimelic acid, suberic acid, azelaic acid, sebacic acid, undecane-α,ω-dicarboxylic acid, dodecane-α,ω-dicarboxylic acid, cis- and trans-cyclohexane-1,2-dicarboxylic acid, cis- and trans-cyclohexane-1,3-dicarboxylic acid, cis- and trans-cyclohexane-1,4-dicarboxylic acid, cis- and trans-cyclopentane-1,2-dicarboxylic acid, cis-and trans-cyclopentane-1,3-dicarboxylic acid,
aromatic dicarboxylic acids, such as phthalic acid, isophthalic acid or terephthalic acid
where the specified dicarboxylic acids can also be substituted.

6. The branched polyester according to claims 1 to 5, where difunctional alcohols (B₂) without olefinically unsaturated bonds are selected from
B₂: ethylene glycol, propane-1,2-diol, propane-1,3-diol, butane-1,2-diol,
butane-1,3-diol, butane-1,4-diol, butane-2,3-diol, pentane-1,2-diol,
pentane-1,3-diol, pentane-1,4-diol, pentane-1,5-diol, pentane-2,3-diol,
pentane-2,4-diol, hexane-1,2-diol, hexane-1,3-diol, hexane-1,4-diol,
hexane-1,5-diol, hexane-1,6-diol, hexane-2,5-diol, heptane-1,2-diol,
1,7-heptanediol, 1,8-octanediol, 1,2-octanediol, 1,9-nonanediol, 1,2-decanediol, 1,10-decanediol, 1,2-dodecanediol, 1,12-dodecanediol, 1,5-hexadiene-3,4-diol, 1,2- and 1,3-cyclopentanediols, 1,2-, 1,3- and 1,4-cyclohexanediols, 1,1-, 1,2-, 1,3- and 1,4-bis(hydroxymethyl)cyclohexanes, 1,1-, 1,2-, 1,3- and 1,4-bis(hydroxyethyl)cyclohexanes, neopentyl glycol, (2)-methyl-2,4-pentanediol, 2,4-dimethyl-2,4-pentanediol, 2-ethyl-1,3-hexanediol, 2,5-dimethyl-2,5-hexanediol, 2,2,4-trimethyl-1,3-pentanediol, pinacol, diethylene glycol, triethylene glycol, isosorbide, dipropylene glycol, tripropylene glycol,
polyethylene glycols HO(CH₂CH₂O)ₙ-H or polypropylene glycols HO(CH[CH₃]CH₂O)ₙ-H, where n is an integer and n is ≥ 4, polyethylene polypropylene glycols, where the order of the ethylene oxide or propylene oxide units can be blockwise or random,
polytetramethylene glycols, poly-1,3-propanediols or polycaprolactones with a molecular weight of up to 5000 g/mol, preferably with a molecular weight up to 2000 g/mol.

7. The branched polyester according to claims 1 to 6, where the number of different components A, B, C and D used is less than or equal to 4.

8. The branched polyester according to claims 1 to 7, where the amount of component A is greater than 20 mol%, based on the total amount of carboxylic acids of components A and C together.

9. A mixture comprising branched polyesters according to claims 1 to 8.

10. The mixture according to claim 9, where the mixture is a textile auxiliary, detergent or cleaner for textiles, additive for detergents or cleaners of textiles, washing auxiliary, laundry after-treatment composition or cleaner, rinse or detergent for hard surfaces.

11. The use of the branched polyesters according to claims 1 to 8 as soil release polymers.

12. The use of the branched polyesters according to claims 1 to 8 as graying inhibitors for textile fabric.

13. The use according to claim 12, where the textile fabrics comprise polyester.

14. The use of the branched polyesters according to claims 1 to 8 in textile auxiliaries, detergents and cleaners for textiles, additives for detergents and cleaners of textiles, washing auxiliaries, laundry after-treatment compositions or cleaners, rinses or detergents for hard surfaces.

15. The use of the branched polyesters according to claims 1 to 8 in aqueous solutions or preparations for achieving a soil release finish on textiles.

16. A method for producing branched polyesters with sulfonate groups, comprising
a. the reaction of the components A, B, optionally C and optionally D to give branched polyesters, where
i. the component A is selected from the group of α,β-olefinically unsaturated dicarboxylic acids (A₂), and
ii. the component B is selected from the group of tri- or higher-functional alcohols (By),
iii. the optional component C is selected from the group of difunctional alcohols (B₂) or the difunctional carboxylic acids (C₂) without α,β-olefinically unsaturated bonds,
iv. the optional component D is selected from fatty acids or fatty alcohols,
b. and the subsequent reaction of the branched polyesters obtained in step a. with hydrogen sulfite, where the molar amount of hydrogen sulfite is at most 95 mol%, based on the amount of α,β-olefinically unsaturated dicarboxylic acid (A₂).

## Revendications

1. Polyesters ramifiés comportant des groupes sulfonate, pouvant être obtenus par
a. la mise en réaction des composants A, B, en option C et en option D, conduisant à des polyesters ramifiés,
i. le composant A étant choisi dans le groupe des acides dicarboxyliques à insaturation α, β-oléfinique (A₂), et
ii. le composant B étant choisi dans le groupe des alcools trifonctionnels ou à plus haute fonctionnalité (By),
iii. le composant optionnel C étant choisi dans le groupe des alcools difonctionnels (B₂) ou des acides carboxyliques difonctionnels (C₂) sans liaisons à insaturation α, β-oléfinique,
iv. le composant optionnel D étant choisi parmi des acides gras ou des alcools gras,
b. et la mise en réaction subséquente des polyesters ramifiés obtenus dans l'étape a. avec de l'hydrogénosulfite, la quantité molaire d'hydrogénosulfite étant au maximum de 95 % en moles, par rapport à la quantité d'acide dicarboxylique à insaturation α,β-oléfinique (A₂).

2. Polyesters ramifiés selon la revendication 1, dans lesquels la proportion du composant trifonctionnel ou à plus haute fonctionnalité B dans l'étape a. est d'au moins 30 % en moles, par rapport à la quantité totale des composants A, B, C et D.

3. Polyesters ramifiés selon la revendication 1 ou 2, dans lesquels les acides dicarboxyliques à insaturation α,β-oléfinique (A₂) sont l'acide maléique, l'acide itaconique, l'acide fumarique, l'acide citraconique, l'acide mésaconique ou l'acide glutaconique.

4. Polyesters ramifiés selon les revendications 1 à 3, dans lesquels les alcools trifonctionnels ou à plus haute fonctionnalité (By) sont choisis parmi
By (y étant supérieur ou égal à 3) :
le glycérol, le triméthyloléthane, le triméthylolpropane, le bis(triméthylolpropane), le 1,2,4-butanetriol, le pentaérythritol, le diglycérol, le triglycérol ou des produits de condensation supérieurs du glycérol, le di(triméthylolpropane), le di(pentaérythritol), des sucres comme par exemple le glucose, le fructose ou le saccharose, des alcools glucidiques comme par exemple le sorbitol, le mannitol, le thréitol, l'érythritol, l'adonitol (ribitol), l'arabitol (lyxitol), le xylitol, le dulcitol (galactitol), le maltitol, l'isomalt, ou l'inositol,
des polyétherols trifonctionnels ou à plus haute fonctionnalité, à base d'alcools trifonctionnels ou à plus haute fonctionnalité, qui sont obtenus par mise en réaction avec l'oxyde d'éthylène, l'oxyde de propylène et/ou l'oxyde de butylène,
des polyesterols trifonctionnels ou à plus haute fonctionnalité, à base d'alcools trifonctionnels ou à plus haute fonctionnalité, qui sont obtenus par mise en réaction avec la caprolactone.

5. Polyesters ramifiés selon les revendications 1 à 4, dans lesquels les acides carboxyliques difonctionnels (C₂) sans liaisons à insaturation α,β-oléfinique sont choisis dans le groupe des
acides dicarboxyliques aliphatiques, tels que l'acide oxalique, l'acide malonique, l'acide succinique, l'acide glutarique, l'acide adipique, l'acide pimélique, l'acide subérique, l'acide azélaïque, l'acide sébacique, l'acide undécane-α,ω-dicarboxylique, l'acide dodécane-α,ω-dicarboxylique, l'acide cis- et trans-cyclohexane-1,2-dicarboxylique, l'acide cis- et trans-cyclohexane-1,3-dicarboxylique, l'acide cis- et trans-cyclohexane-1,4-dicarboxylique, l'acide cis- et trans-cyclopentane-1,2-dicarboxylique, l'acide cis- et trans-cyclopentane-1,3-dicarboxylique,
acides dicarboxyliques aromatiques, tels que l'acide phtalique, l'acide isophtalique ou l'acide téréphtalique
les acides dicarboxyliques nommés pouvant également être substitués.

6. Polyesters ramifiés selon les revendications 1 à 5, dans lesquels les alcools difonctionnels (B₂) sans liaisons à insaturation α,β-oléfinique sont choisis parmi
B₂: l'éthylèneglycol, le propane-1,2-diol, le propane-1,3-diol, le butane-1,2-diol, le butane-1,3-diol, le butane-1,4-diol, le butane-2,3-diol, le pentane-1,2-diol, le pentane-1,3-diol, le pentane-1,4-diol, le pentane-1,5-diol, le pentane-2,3-diol, le pentane-2,4-diol, l'hexane-1,2-diol, l'hexane-1,3-diol, l'hexane-1,4-diol, l'hexane-1,5-diol, l'hexane-1,6-diol, l'hexane 2,5-diol, l'heptane-1,2-diol, le 1,7-heptanediol, le 1,8-octanediol, le 1,2-octane-diol, le 1,9-nonanediol, le 1,2-décanediol, le 1,10-décanediol, le 1,2-dodécanediol, le 1,12-dodécanediol, le 1,5-hexadiène-3,4-diol, les 1,2- et 1,3-cyclopentanediols, les 1,2-, 1,3-et 1,4-cyclohexanediols, les 1,1-, 1,2-, 1,3-et 1,4-bis-(hydroxyméthyl)cyclohexanes, les 1,1-, 1,2-, 1,3- et 1,4-bis(hydroxyéthyl)-cyclohexanes, le néopentylglycol, le (2)-méthyl-2,4-pentanediol, le 2,4-diméthyl-2,4-pentanediol, le 2-éthyl-1,3-hexanediol, le 2,5-diméthyl-2,5-hexanediol, le 2,2,4-triméthyl-1,3-pentanediol, le pinacol, le diéthylène-glycol, le triéthylèneglycol, l'isosorbide, le dipropylèneglycol, le tripropylèneglycol, les polyéthylèneglycols HO(CH₂CH₂O)ₙ-H ou polypropylèneglycols HO(CH[CH₃]CH₂O)ₙ-H, n étant un nombre entier et n étant ≥ 4, les polyéthylène-polypropylèneglycols, l'ordre des motifs oxyéthylène ou oxypropylène pouvant être séquencé ou statistique,
des polytétraméthylèneglycols, poly-1,3-propanediols ou polycaprolactones ayant une masse moléculaire de jusqu'à 5 000 g/mole, de préférence ayant une masse moléculaire allent jusqu'à 2 000 g/mole.

7. Polyesters ramifiés selon les revendications 1 à 6, dans lesquels le nombre des divers composants A, B, C et D utilisés est inférieur ou égal à 4.

8. Polyesters ramifiés selon les revendications 1 à 7, dans lesquels la quantité du composant A est supérieure à 20 % en moles, par rapport à la quantité totale d'acides carboxyliques des composants A et C ensemble.

9. Mélanges contenant des polyesters ramifiés selon les revendications 1 à 8.

10. Mélanges selon la revendication 9, les mélanges consistant en des adjuvants pour textiles, des produits de lavage et de nettoyage pour textiles, des additifs pour produits de lavage et de nettoyage de textiles, des adjuvants de lavage, des produits de traitement après-lavage ou des produits de nettoyage, de rinçage ou de lavage pour surfaces dures.

11. Utilisation des polyesters ramifiés selon les revendications 1 à 8 en tant que polymères pour élimination des salissures.

12. Utilisation des polyesters ramifiés selon les revendications 1 à 8 en tant qu'agents antiredéposition pour tissus textiles.

13. Utilisation selon la revendication 12, dans laquelle les tissus textiles contiennent du polyester.

14. Utilisation des polyesters ramifiés selon les revendications 1 à 8 dans des adjuvants pour textiles, produits de lavage et de nettoyage pour textiles, additifs pour produits de lavage et de nettoyage de textiles, adjuvants de lavage, produits de traitement après-lavage ou produits de nettoyage, de rinçage ou de lavage pour surfaces dures.

15. Utilisation des polyesters ramifiés selon les revendications 1 à 8 dans des préparations ou solutions aqueuses destinées à l'obtention d'un apprêt antisalissure sur des textiles.

16. Procédé pour la préparation de polyesters ramifiés comportant des groupes sulfonate, comprenant
a. la mise en réaction des composants A, B, en option C et en option D, conduisant à des polyesters ramifiés,
i. le composant A étant choisi dans le groupe des acides dicarboxyliques à insaturation α,β-oléfinique (A₂), et
ii. le composant B étant choisi dans le groupe des alcools trifonctionnels ou à plus haute fonctionnalité (By),
iii. le composant optionnel C étant choisi dans le groupe des alcools difonctionnels (B₂) ou des acides carboxyliques difonctionnels (C₂) sans liaisons à insaturation α,β-oléfinique,
iv. le composant optionnel D étant choisi parmi des acides gras ou des alcools gras,
b. et la mise en réaction subséquente des polyesters ramifiés obtenus dans l'étape a. avec de l'hydrogénosulfite, la quantité molaire d'hydrogénosulfite étant au maximum de 95 % en moles, par rapport à la quantité d'acide dicarboxylique à insaturation α,β-oléfinique (A₂).
